# EUROPEAN PATENT SPECIFICATION

(11) **EP 0 982 650 B1**
(45) Date of publication and mention of the grant of the patent: **06.10.2004**
(21) Application number: 96906922.8
(22) Date of filing: 22.03.1996
(51) Int. Cl.: G06F 3/12, B41J 29/38

(54) **PRINTING SYSTEM**
DRUCKSYSTEM
SYSTEME D'IMPRESSION

(43) Date of publication of application: 01.03.2000
(73) Proprietor: Hitachi, Ltd., Chiyoda-ku, Tokyo 101 (JP)
(72) Inventor: KAGEYAMA, Seiji, Kawasaki-shi,Kanagawa 211 (JP); MATSUMOTO, Satoru, Kanagawa 233 (JP); KITAGAWA, Makoto, Fujisawa-shi,Kanagawa 251 (JP); SHIMAKAWA, Takuya, Yokohama-shi,Kanagawa 244 (JP); HIRABAYASHI, Motoaki, Kanagawa 245 (JP)
(74) Representative: Strehl Schübel-Hopf & Partner
(86) International application number: PCT/JP1996/000752
(87) International publication number: WO 1997/036226

(56) References cited:
- JP-A- 1 233 513
- JP-A- 3 155 974
- JP-A- 3 224 778
- JP-A- 4 128 918
- JP-A- 4 227 524
- JP-A- 5 270 064
- JP-A- 7 230 372
- JP-A- 7 256 990
- JP-A- 8 030 413
- JP-A- 60 222 928
- JP-A- 61 196 326

## Description

### Technical Field

The present invention relates to a printing system that allows a plurality of information processing devices including workstations and personal computers interconnected by a network to share a printer.

### Background Art

Recently, a local area network (LAN) and a wide area network (WAN) have become widespread in the fields of workstations and personal computers. With this trend, a print server that allows plural workstations, personal computers, or wordprocessors (hereafter referred to as clients or terminal devices) to share a printer is becoming important in reducing installation cost and space.

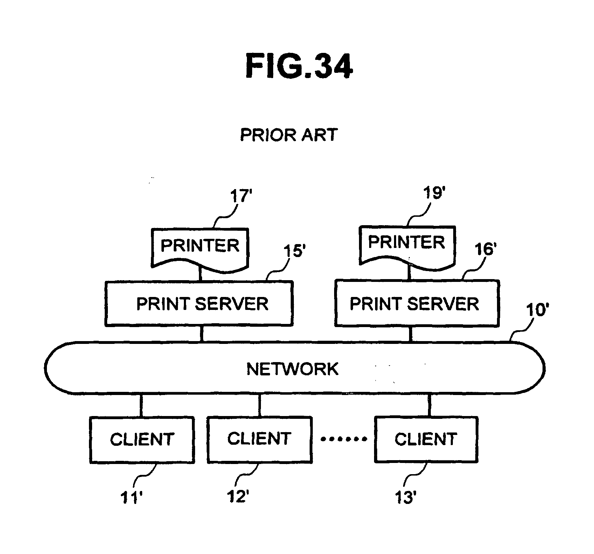

A conventional printing system is constituted by print servers 15' and 16' for controlling a printer 17' and 19' respectively which are shared by clients 11', 12', and 13' as shown in FIG. 34 for example. In such a constitution, printing by the printer 17' for example is performed by a following procedure.

First, clients 11' through 13' send document data indicative of print contents of a document to the print server 15' to request the print server 15' for printing. It is assumed here that the document data is composed of a print command string for describing the print contents of characters, graphics, and images for each document page. This print command string is also called a PDL (Page Description Language).

Receiving the document data from the clients 11' through 13', the print server 15' performs the following processing. First, the print server 15' stores the document data into a file called a spool in the print server 15'. Next, the print server 15' reads the stored document data and sends the same to the printer 17' for printing. Then, the printer 17' processes the received document data to print the processed document data on paper.

The above-mentioned print control technology is disclosed in US-A-5 303 336 for example. Technologies for reprinting in a print server when a trouble such as paper jamming in a printer occurs in such a printing system as mentioned above are disclosed in Japanese Patent Nos. JP 3 155 94 and JP 3 224 778, for example.

However, these disclosed technologies present following problems in trouble-shooting printer failures.

In print recovery by use of a printer that failed, a print recovery operation subsequent to a failed page can be performed by the technology disclosed in Japanese Patent No. JP 3 155 974 or JP 3 224 778. Namely, the print server or the printer edits the original PDL document into the PDL document subsequent to the failed page (hereafter, this edit processing is referred to as page extraction processing or simply as page extraction). Reprinting this edited document effects print recovery. However, in printing in an open environment, different page extraction processing operations are required for various types of PDL, which requires many development processes for these processing operations, making it hard to realize the printing in an open environment.

In print recovery by use of an alternative printer for the printer that failed, if the alternative printer and the printer that failed have different PDL types, the print result on the alternative printer cannot be ensured, failing print recovery.

The above-mentioned conventional technologies also generate needs for job display and edit and job assortment and distribution for a document stored in the spool of a print server. In the job display and edit, the document stored in the spool is displayed (including such operations as scrolling, specific page display, layout display and search display by character string) to a client and edited (including such operations as memo writing and check mark attaching). In the job assortment and distribution, documents stored in the spool are assorted and distributed according to their contents and paper sizes for example. However, in the above-mentioned conventional technologies, performing the job display and edit and the job assortment and distribution require separate job display and edit processing operations and separate job assortment and distribution processing operations for various PDL types. Therefore, these processing operations require many development processes, making it hard to realize these processing operations.

### Disclosure of Invention

It is therefore an object of the present invention to provide a printing system for facilitating printing failure recovery processing by use of an arbitrary printer installed in the system. Another object of the present invention from the different point of view is to provide a printing system capable of substantially reducing the number of processes for developing the capabilities of realizing job display and edit processing and job assortment and distribution processing.

According to the present invention and in order to achieve the above-mentioned objects, there is provided a printing system as defined in the appended in dependent claim 1.

According to a preferable aspect of the invention, the print server has a print job pool for temporarily holding the first print job until the document according to the first print job has been completed. If a printer failure occurs, the print server reads the first print job from the print job pool for reprinting. To be more specific, the print server reconstructs the first print job read from the print job pool into a print job of standard document format composed of a document subsequent to a failed page. The reconstructed print job is executed in a procedure similar to that of a normal print job.

According to another aspect of the invention, the print server has a interrupt print executing means for receiving a third print job of another standard document format while executing the printing operation based on the first print job, discontinuing the execution of the first print job, and executing a printing operation based on the third print job. Upon detection of the end of the printing operation based on the third print job, the interrupt print executing means restarts the printing operation based on the first print job. Preferably, in restarting the first print job, the interrupt job executing means extracts a document composed of unprinted pages from the first print job, generates a print job composed of unprinted page data, and executes a printing operation based on a print job composed of the generated unprinted page data.

According to still another aspect of the invention, the terminal device is provided with a job assortment and distribution means for dividing the first print job into plural divided jobs according to an instruction given by the user, assigning a printer to each of the divided jobs for printing that job, and distributing the divided jobs to the print server that controls the corresponding printer. The print server is provided with a definition file for defining a criterion for dividing one document into plural portions and information for relating each of the divided portions with a printer for printing that portion and a job assortment executing means for dividing a print job transferred from the terminal device into plural partial jobs according to the definition in the definition file, relating each of the divided partial jobs to a printer, and redistributing each partial job to the print server that controls the printers for printing based on the partial jobs. The print server to which each partial job has been distributed concurrently executes the distributed partial jobs for printing.

According to yet another aspect of the present invention, the print jobs transferred to the print server are sequentially accumulated in a document file queue. Each terminal device has a job search request means for requesting the print server to search the document file queue for a print job indicated by the user. In addition, the print server has a job search transmitting means for transferring the print job from the document file queue based on the search request to the requesting terminal device. Further, the terminal device displays the print job transferred from the print server through a job display and edit means edits the print job as instructed by the user, and retransfers the edited print job to the print server through an edited job transfer means. Then, the print server executes the retransferred print job in a manner similar to that of a normal print job.

### Brief Description of Drawings

FIG. 1 is a system block diagram illustrating a constitution of a printing system to which the present invention is applied;
FIG. 2 is a block diagram illustrating an example of a constitution of an information processing apparatus for use as a client, a print server, and a distributed print control server;
FIG. 3 is a block diagram illustrating an example of a hardware constitution of a printer;
FIG. 4 is a functional block diagram illustrating a functional constitution of a client practiced as a first preferred embodiment;
FIG. 5 is a functional block diagram illustrating a functional constitution of a print server in the first preferred embodiment;
FIG. 6 is a diagram illustrating a file constitution of a print job file;
FIG. 7 is a diagram illustrating a data structure indicative of a constitution of device information in a print job;
FIG. 8 is a diagram illustrating a data structure of a standard document file of type 2 provided as a data file;
FIG. 9 is a diagram illustrating a data structure indicative of constitution of page data;
FIG. 10 is a diagram illustrating a data structure indicative of a constitution of page content data;
FIG. 11 is a flowchart indicative of a flow of print processing in the print server;
FIG. 12 is a flowchart indicative of a flow of processing in a first converting module;
FIG. 13 is a flowchart indicative of a flow of processing by a print recovery service of a spooler capability extension service;
FIG. 14 is a functional block diagram illustrating a functional constitution of a client practiced as a second preferred embodiment of the invention;
FIG. 15 is a functional block diagram illustrating a functional constitution of a print server in the second preferred embodiment;
FIG. 16 is a flowchart indicative of print processing by the print server in the second preferred embodiment; FIG. 17 is a flowchart indicative of a flow of processing by a first converting module in the second preferred embodiment;
FIG. 18 is a flowchart indicative of a procedure of print recovery processing by a print recovery service;
FIG. 19 is a functional block diagram illustrating another functional constitution of the print server in the second preferred embodiment;
FIG. 20 is a flowchart indicative of print processing in the print server shown in FIG. 19;
FIG. 21 is a schematic diagram illustrating a relation failure reporting between client and print server;
FIG. 22 is a schematic diagram illustrating a procedure of print recovery by use of a same printer;
FIG. 23 is a schematic diagram illustrating a procedure of print recovery by use of an alternative printer;
FIG. 24 is a diagram for describing a user interface for searching a printer adapted to necessary specifications or an alternative printer;
FIG. 25 is a diagram illustrating a display example of a printer search result;
FIG. 26 is a diagram illustrating a display example of print failure information to be sent to the user of a client or a system administrator at occurrence of print failure;
FIG. 27 is a diagram illustrating a user interface for receiving a recovery instruction from the user;
FIG. 28 is a diagram illustrating contents of failure information in the case where printer and print server are interconnected by a unidirectional interface;
FIG. 29 is a diagram illustrating contents of failure information in the case where printer and print server are interconnected by a bidirectional interface;
FIG. 30 is a diagram illustrating contents of information to be given as processing contents of failure recovery;
FIG. 31 is a diagram illustrating an interface for accepting a print recovery condition from the user;
FIG. 32 is a diagram illustrating a method of displaying a candidate list of printers for reprinting;
FIG. 33 is a diagram illustrating an example of a screen for displaying contents of a print job; and
FIG. 34 is a diagram illustrating a system constitution of a conventional printing system.

### Best Mode for Carrying Out the Invention

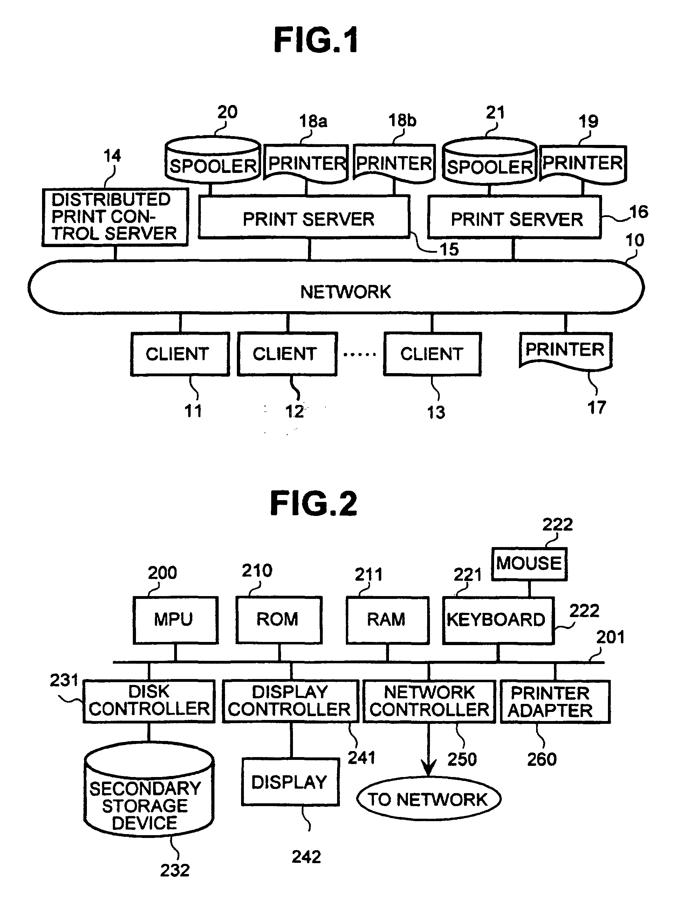

FIG. 1 is a diagram illustrating a constitution of a printing system to which the present invention is applied. The printing system comprises terminal devices 11, 12, and 13 that provide clients for generating a document for example and requesting printing of the document (these terminal devices hereafter simply referred to as clients), plural printers 17, 18a, 18b, and 19 to be shared by the clients 11, 12, and 13, print servers 15 and 16 for controlling printing operations of these printers, a distributed print control server 14, and a network 10 such as LAN or WAN for interconnecting the above-mentioned components. The distributed print control server 14 collectively controls all print servers and printers on the network 10. The print servers 15 and 16 are connected to spoolers 20 and 21 respectively in which document data is stored temporarily.

Each printer may be connected to the system through a local bus of the print server as with the printers 18a, 18b, and 19, or connected directly to the network 10 as with the printer 17. Herein, the printers 18a, 18b, and 19 that are connected directly to the print servers are referred to as server direct-coupled printers and the printer 17 that is connected to the network is referred to as a network printer. Each printer is controlled by the print server 15 or 16. The print procedure itself of the printing system shown in FIG. 1 is not especially different from that of the conventional printing system.

For the clients 11, 12, and 13, the print servers 15 and 16, and the distributed print control server 14, information processing equipment such as personal computers and workstations are actually used. FIG. 2 is a block diagram illustrating an example of a constitution of information processing equipment for use as the client, the print server, and the distributed print control server.

As shown, the information processing equipment for use in the present printing system comprises an MPU 200, a system bus 201, a ROM 210, a RAM 211, a keyboard 221, a disk controller 231, a display controller 241, a network controller 250, and a printer adapter 260. These components are interconnected by the system bus 201.

The keyboard 221 is an input device having plural input keys, to which a mouse 222, a kind of a pointing device, is connected. The disk controller 331 is connected to a secondary storage device 232. The display controller is connected to a display 242. The network controller 250 is connected to the network 10 for performing communication with other devices connected to the network 10.

It should be noted that, if the information processing equipment shown in FIG. 2 is used as equipment that less frequently performs interactive input/output operations with the user like the print servers 15 and 16 and the distributed print control server 14, the keyboard 221, the mouse 222, and the display 242 may be simplified into a user operation panel. Although this lowers the man-machine interface capabilities, the cost may be saved. If the information processing equipment is used as the clients 11 through 13 and the distributed print control server and no local printer needs to be installed, the printer adapter 260 may be excluded from the constitution.

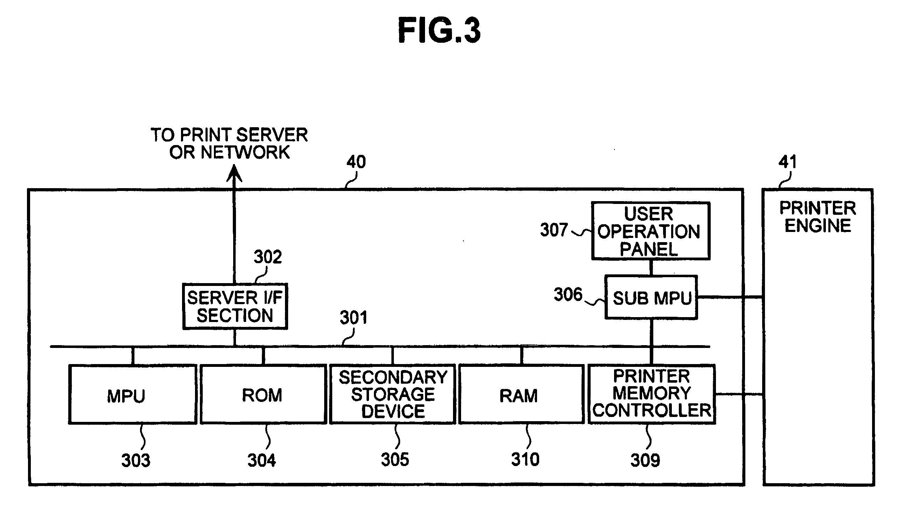

FIG. 3 is a block diagram illustrating an example of a hardware constitution of the printers 17, 18a, 18b, and 19. Each printer is composed of a printer controller 40 that controls printing according to an instruction coming from the print server 15 or 16 and a printer engine 41 for actually printing a document onto a sheet of paper. The printer controller 40 and the printer engine 41 communicate each other through an interface called a printer engine interface.

The printer controller 40 is composed of an MPU bus 301, a server interface (hereafter referred to as a server I/F) 302, an MPU 303, a ROM memory 304, a secondary storage device 305, a user operator panel 307, a sub MPU 306, a printer memory controller 309, and a RAM 310.

The server I/F 302 is a controller for performing communication with the printer server, which is a higher level device, through an interface called a server interface. To be more specific, if, like the printers 18a, 18b, and 19, connection is made to the local bus of the print server, an interface such as SCSI (Small Computer System Interface), RS232C, RS422, GP-IB (General Purpose Interface Bus), or Centronix is used. If, like the printer 17, connection is made directly to the network 10, an interface such as HDLC (High-Level Data LinkControl), Token-Ring, FDDI (Fiber Distributed Data Interface), or ISDN (Integrated Services Digital Network) is used. According to the type of the interface used, an appropriate hardware logic of the server I/F section 302 is installed.

The ROM 304 stores a program (IPL) for initializing the printer controller 40 and a part of character fonts. The RAM 310 stores a control program, the rest of the character fonts, a page buffer control table, a printer control table, and other control tables. The RAM 310 is also used as a command buffer and a page buffer. The control program and the rest of the character fonts are downloaded from one of the print server by the above-mentioned IPL program and stored in the RAM 310. It should be noted that the control program and the rest of the character fonts may be stored in the ROM 304 beforehand instead of being stored in the RAM 310. Conversely, all character fonts may be stored in the RAM 310.

The sub MPU 306 performs input/output processing with the user operation panel 307 and the printer engine 308 according to an instruction given by the MPU 303. If the printer is a shuttle printer, the sub MPU 306 receives a signal and the like indicative of a page start position from the printer engine 41. If the printer is a laser printer, the sub MPU 306 sends an inquiry or an instruction to the printer engine 41 or controls the procedure for reading the contents of the page buffer to the printer engine.

The printer memory controller 309 controls the processing of reading the contents of the RAM 310 (normally, the contents of the page buffer) and, if the RAM memory 310 is made of a DRAM, controls a DRAM memory refresh operation. The printer memory controller 309 has a DMA (Direct Memory Access) capability to execute the processing of reading data from the RAM 310 not via the MPU 303. It should be noted that, if the printer is a shuttle printer, the contents of the page buffer are converted in format to be transferred to the printer engine 41. If the printer is a laser printer, parallel-to-serial converted data is transferred to the printer engine 41. The printer memory controller 309 asserts an interrupt signal to the MPU 303 when one page of data has been read from the page buffer during print processing, thereby starting page buffer read end interrupt processing by the MPU 302.

The following specifically describes preferred embodiments of the invention based on some examples.

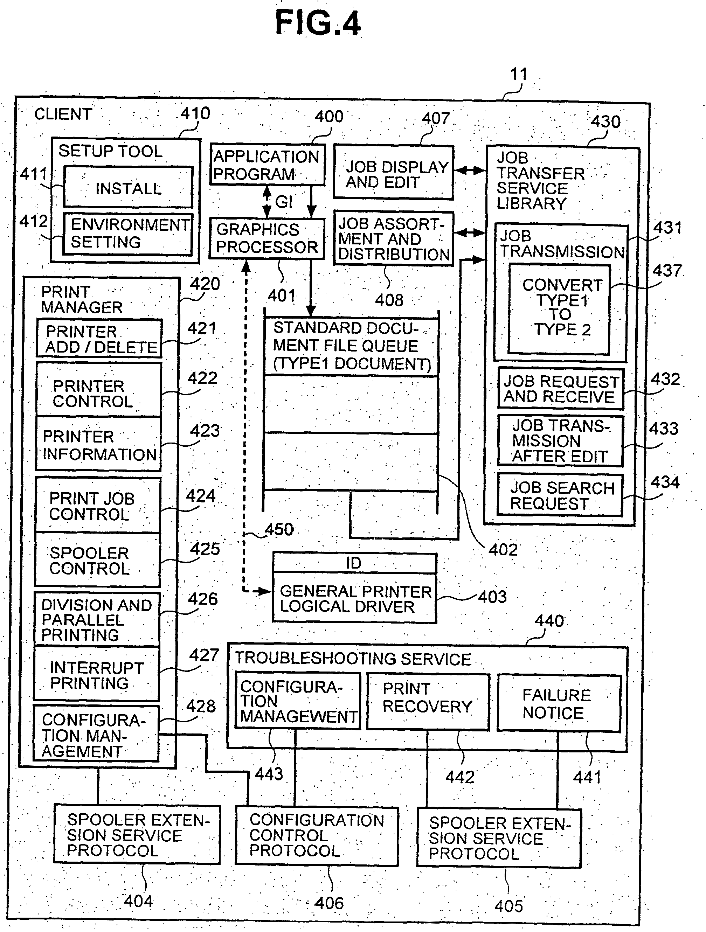

FIG. 4 is a diagram illustrating a functional constitution of the client 11 in a first preferred embodiment. In what follows, the description is made by use of the client 11, but the other clients have also the similar capabilities. It should be noted that, in the first preferred embodiment to be described below, an example in which the distributed print control server 14 is not used will be described.

The client 11 has an application program 400, a setup tool 410, a print manager 420, a graphics processor 401, a standard document file queue 402, a general printer logical driver 403, a job transfer service library 430, and a troubleshooting service 440.

The application program 400 includes a wordprocessor, a spreadsheet program, and a graphics program for example, generating a document, graphics, and the like (hereafter simply referred to as a document) and instructing printing of the generated document. The setup tool 410 has an install section 411 for performing program installation and uninstallation and registration and deletion of various services and an environment setting section 412 for setting a network and various parameters.

The application program 400 requests, by API (Application Program Interface) called GI (Graphical Interface), the graphics processor 401 for printing. The graphics processor 401 sequentially receives the document data generated by the application program in the GI interface, converts the received document data into a format called type-1 standard document file (hereafter referred to as fos_1, where fos stands for file of standard format for devices), and sequentially stores the result into the standard document file queue 402. The standard document file format denotes a unified standard file format independent of printer type. The standard document file has a feature of facilitating job processing (printer troubleshooting processing including page extraction, job display and edit, job assortment and distribution, automatic assortment, division and parallel printing, interrupt printing, and so on to be described later) on a page basis. Details will be described later.

The print manager 420 is GUI (Graphical User Interface) for the user or a system administrator to perform various control operations on the printer, print server and print jobs. To be more specific, the print manager has a printer add/delete section 421 for adding a printer to the present printing system and deleting a printer, a printer control section 422 for controlling the added printer, a printer information section 423 for obtaining information about the added printer, a print job controller 424 for controlling a print job, and a spooler controller 425 for controlling a spooler.

The general printer logical driver 403 is a functional element that receives a type-1 standard document file, generates a PDL document corresponding to each printer, and sends the generated PDL document to a printer physical driver. As shown in FIG. 4, in the client 11, the general printer logical driver 403 sends to the graphics processor 401 (as indicated by dotted line in the figure) printer physical information such as paper top/bottom and left/right margins, specifications of printer-installed fonts, and printer device information to be described later for example as the physical information of the printer to be actually used. Using the received printer physical information, the graphics processor 401 generates a type-1 standard document file.

The job transfer service library 430 provides capabilities for each processing in the client to access each standard document in the standard document file queue on the print server to be described later. To be more specific, this library provides a job transmitting capability 431, a job request and receive capability 432, an edited job transmitting capability 433, and a job search request capability 434. In response to each request from the client through job transfer service library 430, the job transfer service to be described later on the print server executes actual access service to each standard document in the standard document file queue.

It should be noted that a job denotes one unit of document that the application program 400 has requested the print service for printing. In the present embodiment, the standard document file is a particular representation of a job. The present embodiment uses two types of standard document files, namely a type-1 standard document file which is generated by the graphic processor 401 and a type-2 standard document file (fos_2) which is stored by the job transmitting capability 433 into the standard document file queue in the print server. For example, in a type-1 standard document file, each page of a print job is represented in a different file to facilitate the processing of the graphics processor. In a type-2 standard document file, an entire job is represented in one file to facilitate access to the standard document file queue. The job transmitting capability 431 has a converting capability 437 for converting a type-1 standard document file read from the standard document file queue 402 into a type-2 standard document file.

The troubleshooting service capability 440 is a GUI portion for the user or system administrator to perform, in the client 11, troubleshooting on a printer, a print server, or a print job. A term "service" used in this capability is used because the spooler capability extension service capability on the print server to be described later uses this troubleshooting service capability 440 when the print server has detected various failures, thereby requesting the user to take actions for troubleshooting. The troubleshooting service 440 communicates with the spooler capability extension service on the print server via a spooler extension service protocol 405.

The troubleshooting service capability 440 has a failure notifying section 441 and a print recovery section 442. The failure notifying section 441 receives a failure report from the spooler capability extension service in the print server and displays the contents of the failure report on a monitor, notifying the user thereof. The print recovery section 442 performs such processing as displaying the state of the printer that failed, reprinting, test printing, and print job cancellation. In reprint processing, the user can specify which printer is to be used for reprinting, the printer that failed or an alternative printer. Test printing is a capability of performing a trial printing operation before reprinting. Print job cancellation is a capability of deleting the failed job from the print server, thereby canceling the failed print job.

It should be noted that, referring to FIG. 4, a division and parallel printing capability 426, an interrupt printing capability 427, and a configuration control capability 428 of the print manager 420 and a configuration control capability 443 of the troubleshooting service 440, a job display and edit capability 407, a job assortment and distribution capability 408, and a configuration control protocol 406 are used in other embodiments and therefore are not especially used in the embodiment described hereinafter.

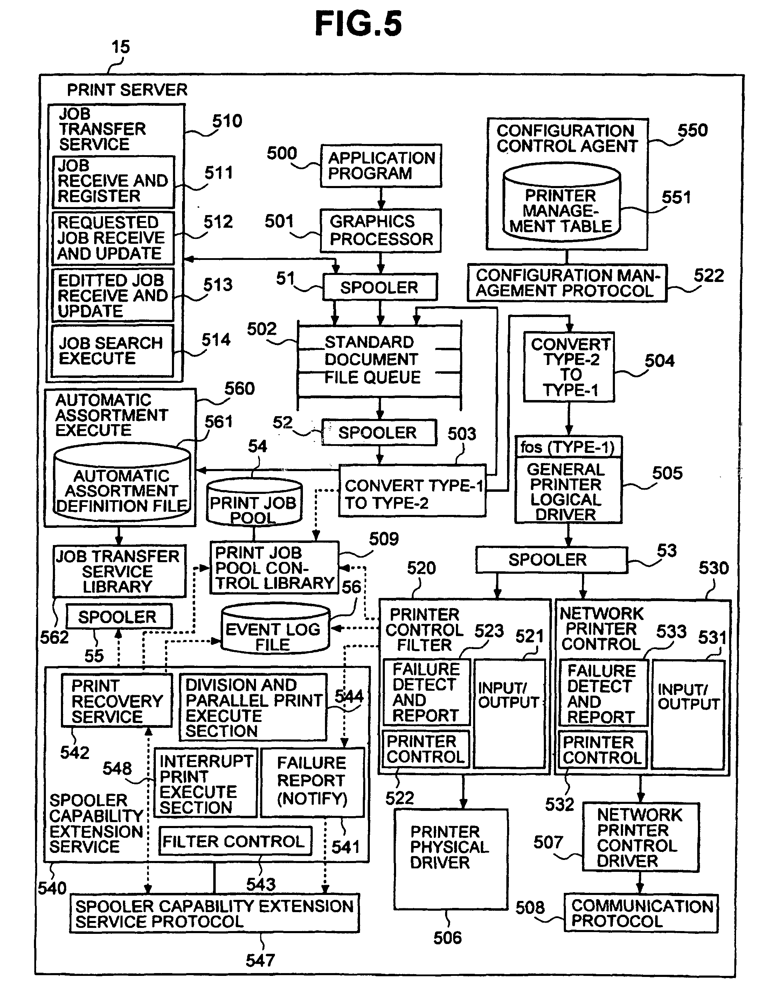

FIG. 5 is a diagram illustrating a functional constitution of the print server 15 in the first preferred embodiment. The following description is made by use of the print server 15 for the sake of description although the other print server has the same capabilities.

The print server 15 has an application program 500, a graphics processor 501, a job transfer service 510, a spooler 51, a standard document file queue 502, a spooler 52, a first converting section 503, a second converting section 504, a general printer logical driver 505, a spooler 53, a printer control filter 520, a network printer control filter 530, a printer physical driver 506, a network printer control driver 507, a communication protocol 508, a spooler capability extension service 540, a print job pool 54, a print job pool control library 509, and a job transfer service library 562.

The application program 500 and the graphics processor 501 have the same capabilities as those of the application program 400 and the graphics processor 401 in the client 11. The application program 500 and the graphics processor 501 give a print instruction to the print server capability in the computer on which they are installed. The print instruction to be given by an application program installed on the same computer is referred to as a local printing operation. On the other hand, a print instruction to be given by an application program installed on another computer connected via network to the print server 15 is referred to as a remote printing operation.

The job transfer service 510 provides an actual access service in response to an access request from the job transfer service library 430 in the client to the standard document file queue 502. To be more specific, in response to the requests for the job transmission, job request and reception, job transmission after job editing, and job search request from the job transfer service library 430 of the client, the job transfer service executes job receive and register processing 511, requested job search and transmission 512, edited job receive and update 513, and job search execution 514.

The spooler 51 executes input to/output from the standard document file queue 502 for the graphics processor 501, the job transfer service 510, and the print manager 420 in the client. Communication between the print manager 420 and the spooler 51 may be performed directly or via a relay capability section (not shown) in the client.

The standard document file queue 502 is a queue for job storage arranged in a portion before printer output in the print server, sequentially storing all print jobs issued by both the client and the print server in the order in which print requests occurred.

The spooler 52 sequentially reads jobs from the standard document file queue 502 and sends these jobs to the first converting section 503. If the format of an inputted job is type-1 standard document file (fos_1), the first converting section 503 converts the inputted type-1 standard document file into a type-2 standard document file by the converting capability and enters the resultant file into the standard document file queue 502 again. If the type of an inputted job is type-2 standard document file (fos_2), the first converting section 503 outputs the same to the second converting section 504.

The second converting section 504 converts the received print job of type-2 standard document file into a type-1 standard document file and sends the resultant file to the general printer logical driver 505. The general printer logical driver 505 converts the received type-1 standard document file into the PDL format of the output printer and outputs the resultant file to the spooler 53.

If the output printer is the printer coupled with a server directly, the spooler 53 sends the received document of PDL format to the printer control filter 520, printing the document on the printer via the printer physical driver 506. If the output printer is a network printer, the spooler 53 sends the received document of PDL format to the network printer control filter 530, printing the document on the network printer via the network printer control driver 507 and the communication protocol 508.

The printer physical driver 506 is a device driver for performing input to/output from with the printer coupled with a server directly. By use of this capability, the printer physical driver sets such various parameters to the printer as single-side/bode-side print mode, dot density, paper size, paper supply section, and paper eject section, and performs such operations as outputting a PDL-format document to the printer and reading a printer state (such as a failure state). The network printer control driver 507 provides the same capabilities as those of the printer physical driver 506 to the network printer.

The printer control filter 520 has an input/output section 521 for performing driver open, close, write, and read operations on the printer physical driver 506, a printer controller 522 for controlling the printer by use of the input/output section 521, a failure detect and report section 523 for performing detection and report of a failure by use of the input/output section 521. The network printer control filter 530 provides the same capabilities as those of the printer control filter 520 to the network printer. It should be noted that the capabilities of the printer control filter 520 and the network printer control filter 530 may be installed in another functional portion of the print server, thereby removing the printer control filter 520 and the network printer control filter 530 from the present embodiment.

The communication protocol 508 provides capabilities of controlling communication protocols such as TCP/IP and SPX/IPX. The network printer control driver 530 controls the communication protocol 507 to execute communication with the network printer.

The spooler capability extension service 540 provides an extended capability to the basic capability of print job control in the print server 11. Hence, the spooler capability extension service 540 has a failure report section 541 for reporting a detected failure to the troubleshooting service 440 in the client, a print recovery service section 542 for recovering the printing of a print job at occurrence of printer failure, and a filter controller 543 for extending the spooler capability through control by the printer control filter 520.

Next, the print job pool 54 and the print job pool control library 509 will be described. The processing subsequent to the first converting section 503 is executed by converting a print job into a PDL format different from the standard document file format. A file of PDL format depends on the type of a printer, therefore, it is difficult to perform reprocessing on a page basis which is performed in recovery from failure. The print job pool 54 is used as a job storage for storing a print job in standard document file format that facilitates reprocessing.

The print job pool control library 509 provides an interface library for generating and deleting the print job pool 54 and adding, taking out, and deleting jobs for the print job pool 54. The print job pool 54 corresponds to the standard document file queue 502 one to one and is generated by the printer add/delete capability 421 in the print manager 420 at adding the printer to the printing system. At deletion of a printer from the printing system, the print job pool is deleted by the printer add/delete capability 421. The print jobs stored in the print job pool 54 correspond to the print jobs in the standard document file queue one to one. The first converting section 503 stores a print job taken out of the standard document file queue 502 into the print job pool 54 by use of the print job pool control library 509. Each print job is held in the print job pool in the format of type-2 standard document file. It should be noted that retaining each print job held in the standard document file queue 502 until the entire process of printing properly ends, even after the end of output to the printer allows the same printer troubleshooting capability as mentioned above to be realized without providing the print job pool control library 509.

The job transfer service library 562 is equivalent to the job transfer service library 430 of the client and therefore has the same capabilities as those of the job transfer service library 430.

It should be noted that, referring to FIG. 5, a division and parallel print executing section 544 and an interrupt print executing section 542 of the spooler capability extension service 540, a configuration control agent 550, a configuration control protocol 552, and an automatic assortment executing section 560 are used in another embodiment and therefore not used in the embodiment described here.

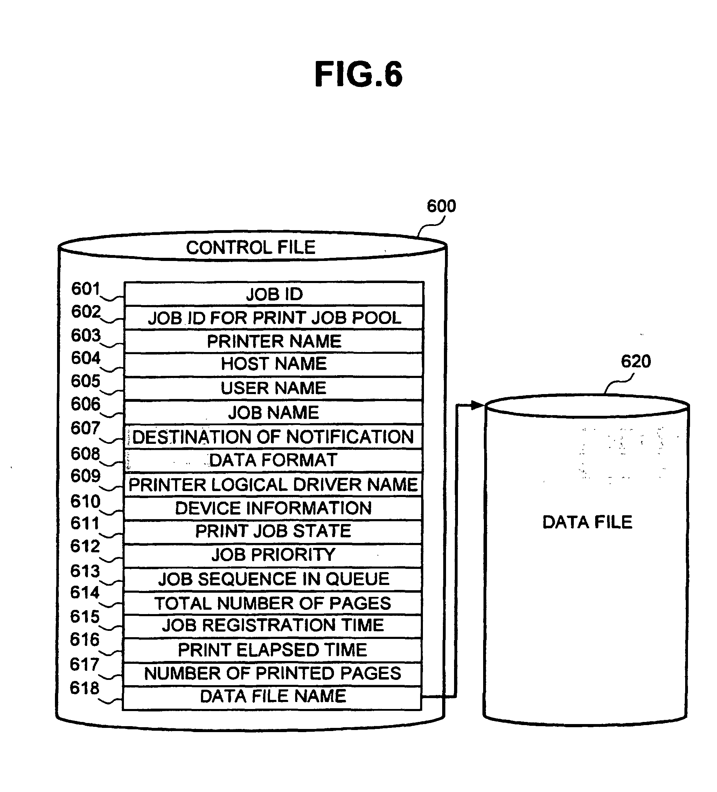

FIG. 6 is a diagram illustrating a data structure of a print job. Each print job is composed of a control file 600 for describing control information and a data file 620 for describing print contents. The control file 600 and the data file 620 have names such as "¥spool¥printer a¥cf0001" and "¥spool¥printer a¥df0001" for example, where "printer a" indicates the name of printer and "¥spool¥printer a" indicates the standard document file queue for the printer a named "¥spool¥printer a." "¥spool¥printer a¥cf0001" denotes the first control file numbered 0001 in this standard document file queue. "¥spool¥printer a¥df0001" denotes the first data file numbered 0001 in the standard document file queue "¥spool¥printer a." It should be noted that "0001" is equivalent to job ID.

The control file 600 describes, as job attribute information, a job ID 601 (equivalent to the above-mentioned "0001") indicative of a serial number of a job, a job ID 602 for print job pool indicative of the job number of a corresponding print job in the print job pool, a printer name 603 indicative of the printer on which the job is printed, a host name 604 of the computer that issued this print job, a user name 605 indicative of the user who issued this print job, a job name 606 available when referred by the print manager, a destination of notification 607 of printer failure information about this print job, a data format 607 (one of type-1 standard document file fos_1, type-2 standard document file fos_2, device-associated document file fcd, or page description language PDL) of a data file constituting the print job, a general printer logical driver name 609 for a printer to be identified by the printer name 603, device information 610 for describing information associated with a printer device, a print job state 611 for describing various states (also including a display state) of the print job, a job priority 612 between plural print queues, a job sequence 613 in each print queue, a total number of pages 614 of the print job, a job registration time 615, a print elapsed time 616 after registration, the number of printed pages 617, and a corresponding data file name 618. In the data file name 618, a data file name such as above-mentioned "¥spool¥printer a¥df0001" is entered.

The information held in the print job pool 54 is composed of control file information corresponding to the control file 600 and data file information corresponding to the data file 620. For example, if the print job is constituted by the control file "¥spool¥printer a¥cf0001" and the data file "¥spool¥printer a¥df0001", the print job pool 54 holds the control file information having file name "¥jobpool¥printer a¥cf0001" and data file information having file name "¥jobpool¥printer a¥d f0001". The control file information includes a sequence of information from the job ID 601 held in the control file 600 to the number of printed pages 617.

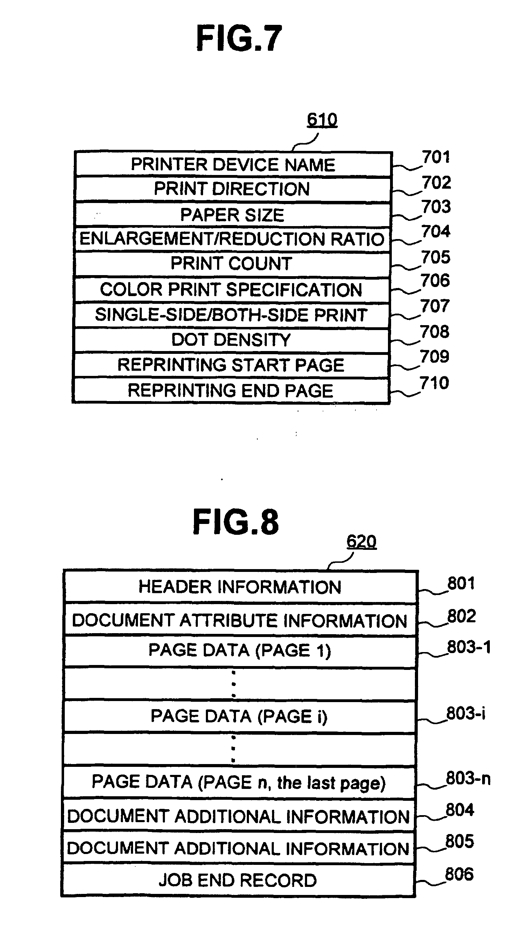

As shown in FIG. 7, the device information 610 is composed of a printer device name 701 to be used by print jobs (composed of a manufacturer name, a printer model number, and so on), a print direction 702 distinguishing between portrait and landscape, a paper size 703 indicative of the size of paper used, an enlargement/reduction ratio 704 indicative of ratio of enlargement and reduction, a print count 705 indicative of the number of prints to be printed in this print job, a color print specification 706 indicative of the color print specification of this print job, a single-side/both-side print 707 indicative whether this print job is to print single-side or both-side, a dot density 708 indicative of a dot density requested in this print job, a reprint start page 709, and a reprint end page 710. The reprint start page 709 includes (a) a print start page in the case where reprinting is performed by use of the failed printer or an alternative printer when a failure occurred, (b) a print start page in the case where reprinting is performed after normal end of the print job, and (c) a print start page in the case where the print job is moved to the print queue for another printer before starting printing.

FIG. 8 is a diagram illustrating a data structure of a type-2 standard document file providing the data file 620. A type-1 standard document file may also be described in the same concept. As shown, the data file 620, namely a standard document file, is composed of header information 801 associated with this file in its entirety, document attribute information 802, page data 803-1 (page 1), 803-i (i-th page), and 803-n (last page) constituting the file, document additional information 804 and 805 about the entire document, and a job end record 806.

The header information 801 is written with a name of print server software for this printing system, a print job name, and a page printable area (in unit of 0.01 mm for example) as this print job in its entirety. The document attribute information 802 is an area in which the document attributes shown in the job ID 601 through 617 indicative of the number of printed pages of the control file 600 shown in FIG. 6. The job end record 806 is a record for explicitly indicating the end of the print job according to this data file.

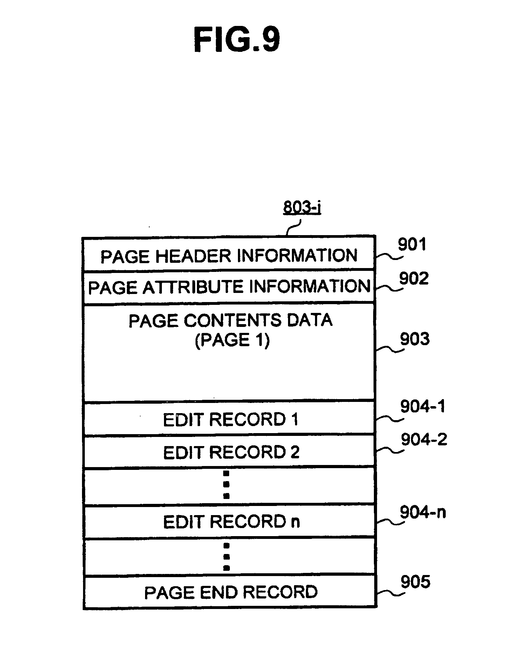

FIG. 9 is a diagram illustrating a constitution of the page data 803-i of i-th page. As shown, the page data 803-i includes page header information 901 associated with this page, page attribute information 902, page contents data 903, a first edit record 904-1, a second edit record 904-2, nth edit record 904-n, and a page end record 905.

The page header information 901 is written with a name of print server software for this printing system, a print job name, a serial number of this page, and a paper printable area (in unit of 0.01 mm for example) of this page.

The page attribute information 902 is an area in which the page attribute information for this page is written, the page attributes including the printer device attributes such as the printer device name 701 through the print end page 710 given as the device information 610 shown in FIG. 7.

Each edit record 904 is used when the job display and edit section 407 reads a standard document file, which is a print job, from the standard document file queue 502 in the print server for performing an editing operation. In this editing operation, when the user writes a memo, attaches a marker, and enters a bookmark for example, the information associated therewith is sequentially written to the edit record 904. A result of this editing operation is sent to the print server by use of the edited job transmitting capability 433 for example.

The page end record 907 is a record for explicitly indicates a page break between the pieces of page data 803 (803-1, 803-i, to 803-n). Use of the page end record 907 allows the above-mentioned page extraction and each of such processing operations to be described later as division and parallel printing, interrupt printing, job display and editing, job assortment and distribution, and automatic assortment to detect page breaks in a job without analyzing the page contents data 903.

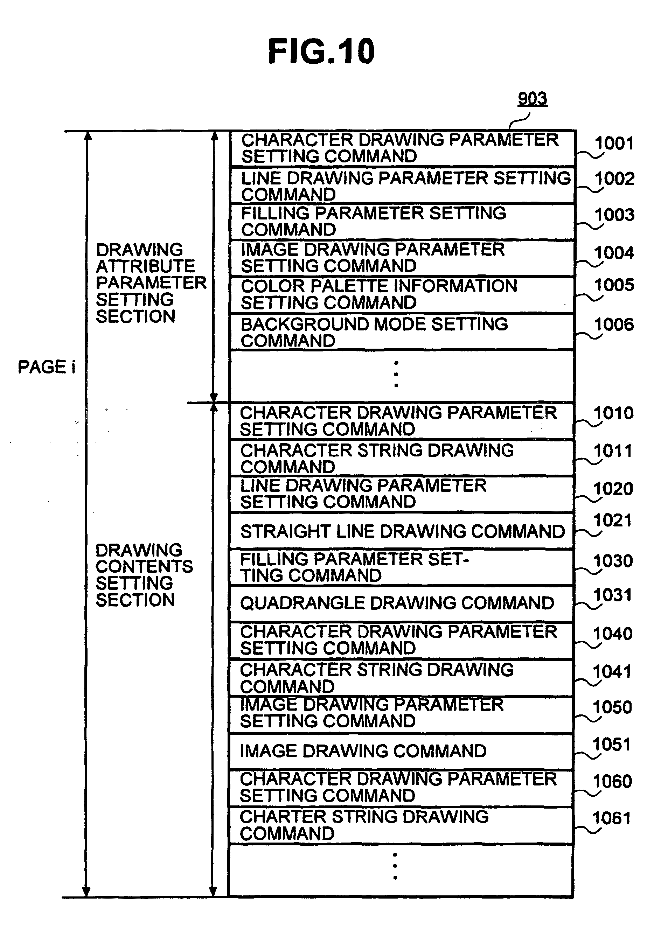

FIG. 10 shows a structure of the page contents data 903. As shown, the page contents data 903 is composed of a drawing attribute parameter setting section and a drawing contents setting section. The drawing attribute parameter setting section sets the values of various drawing attributes parameters at each page head. The drawing contents setting section specifies drawing contents such as characters, line graphics, surface graphics, and images in each page.

To be more specific, the drawing attribute parameter setting section includes a character drawing parameter setting command 1001 for setting font type and size for example, a line drawing parameter setting command 1002 for setting line type and thickness for example, a filling parameter setting command 1003 for selecting a fill pattern for example, an image drawing parameter setting command 1004 for setting an image drawing parameter such as color information for example, a color palette information setting command 1005 for setting color palette information for example, and a background mode setting command 1006 for setting transparent/non-transparent for example.

The drawing contents setting section, to be more specific, includes a character drawing parameter setting command 1010, a character string drawing command 1011, a line drawing parameter setting command 1020, a straight line drawing command 1021, a filling parameter setting command 1030, a quadrangle drawing command 1031, a character drawing parameter setting command 1040, a character string drawing command 1041, an image drawing parameter setting command 1050, an image drawing command 1051, a character drawing parameter setting command 1060, and a character string drawing command 1061 and so forth.

It should be noted that, if any one of the following constitutions is used for the page contents data 903, the same can also realized:
(1) The drawing attribute parameter setting section at each page head is removed for providing a reset command to initialize all drawing attribute parameters.
(2) The drawing attribute parameter setting section at each page head is removed. Instead, a pair of commands for drawing attribute parameter setting are always entered in the drawing contents setting section before each drawing command.
(3) All drawing attribute parameter setting commands are removed from character, line, and surface drawing operations. Every time a drawing contents setting command is used, a drawing attribute parameter is specified as its input argument.

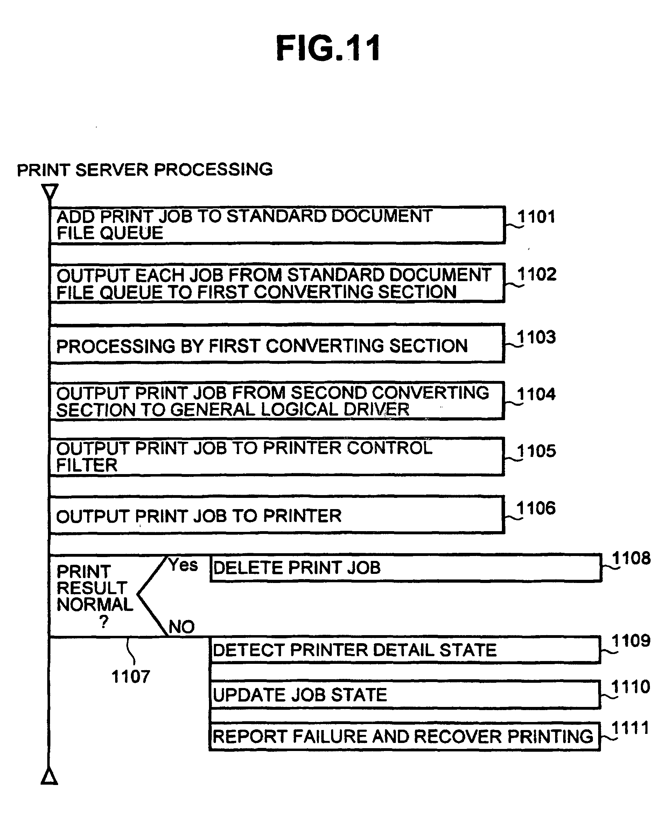

FIG. 11 is a flowchart indicative of a flow of print processing in the print server. Here, a document generated by the application program 400 in the client 11 and a document generated by the application program 500 in the print server 15 are added to the print server 15 as print jobs to be printed.

First, the print server adds the print jobs to the standard document file queue 502 (step 1101). Here, the document generated by the application program 400 of the client 11 is registered as a type-2 standard document file and the document generated by the application program 500 of the print server 15 is registered as a type-1 standard document file.

Each print job in the standard document file queue 502 is read by the spooler 53 to be outputted to the first converting section 503 (step 1102).

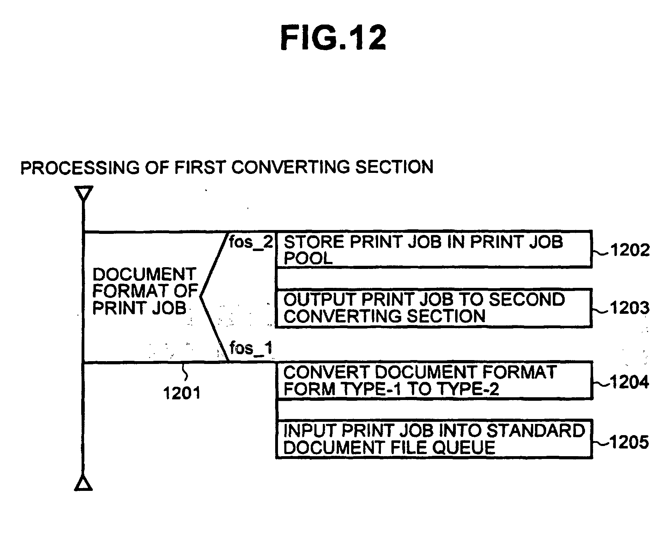

The first converting section 503 sequentially processes the inputted print jobs (step 1103). The first converting section 503 determines the document format of each print job as shown in FIG. 12 (step 1201).

If the document type is found type-2 standard document format, the first converting section 503 stores the print job into the print job pool 54. At this moment, the capability of the print job pool control library 509 is used (step 1202). Next, the print job is outputted to the second converting section 504 (step 1203).

On the other hand, if the document format is found type-1 standard document format, the first converting section 503 converts the type of print job from type-1 standard document file format into type-2 standard document file format (step 1204). Then, the resultant print job of type-2 standard document file format is reentered in the standard document file queue 502 (step 1205).

Referring to FIG. 11 again, in step 1104, the second converting section 504 converts the type of print job from type-2 standard document file format to type-1 standard document file format and outputs the resultant print job to the general printer logical driver 505.

The general printer logical driver 505 converts the format of the received print job into the PDL format, which is print instruction contents corresponding to each printer to be actually used for printing and outputs the resultant print job to the printer control filter 520 or the network printer control filter 530 (step 1105).

The printer control filter 520 or the network printer control filter 530 outputs the print job to the printer through the printer physical driver 506 or the network printer control driver 507 (step 1106).

Then, the printer control filter 520 or the network printer control filter 530 receives a print result of the print job from the printer driver and determines whether the result is normal or not (step 1107).

If the print result is found normal, the print job is deleted (step 1108). To be more specific, the print job is deleted from the print job pool 54 by making use of the capability of the print job pool control library 509.

If the print result is found abnormal, a printer detailed state including a detailed failure state of the printer is detected (step 1109). Next, the job state is updated based on the printer detailed state (step 1110). In the present embodiment, the following job states are provided: "pending", "error", "in deletion", "in spool", "in printing", "off-line", "out of paper", "print completed", "in editing", "in moving", "in recovering" and "waiting for printing." "In pending" denotes a state in which the current job is not processed in order when its turn of processing in the standard document file queue 502 comes but a next print job is processed. When the current job is taken out of the "pending" state by the instruction of user or the system administrator, that job is again put in the state to be processed. The "pending" state is provided for executing such processing as job display and edit, job assortment and distribution, and automatic job assortment in another embodiment to be described later. After completion of each of these processing operations, the print job is taken out of the "pending" state. "Error" denotes occurrence of failure during printing of the current print job. "In deletion" denotes that the current job is being deleted from the standard document file queue. "In spooling" denotes the current job is being added to the standard document file queue. "In printing" denotes that the current job is being printed on the printer. "Off-line" denotes that the current job has been sent to the printer but the printer is in offline state. "Out of paper" denotes that the current print job has been sent to the printer but the printer is out of paper. "Print completed" denotes that the current print job has been sent to the printer and fully printed. "In editing" denotes that the current print job in the standard document file queue 502 is being processed by the job display and edit capability 407, the job assortment and distribution capability 408, or the job automatic assortment and executing section 560 (the processing by these capabilities will be described later with reference to another embodiment). "In moving" denotes that the current print job in the standard document file queue is being moved to a standard document file queue corresponding to another printer. "In recovering" denotes that the current print job in the standard document file queue 502 is being recovered from the printer failed state and is being reprinted. "Waiting for printing" denotes that the current print job has already been added to the standard document file queue 502 and is waiting for processing.

After the job state is updated in step 1110, the failure is reported to the client by use of the failure report capability 541 of the spooler capability extension service 540 and print recovery by use of the print recovery service 542 is executed. In the print recovery processing, the printer that failed or an alternative printer is used for reprinting (step 1112).

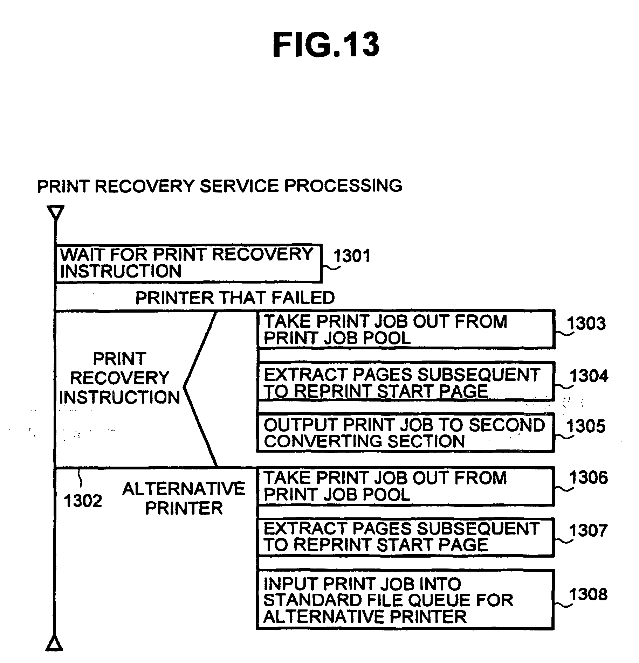

FIG. 13 is a flowchart indicative of a processing procedure of the print recovery service 542 of the spooler capability extension service 540.

The print recovery service 542, if an abnormal print state (the "error" print job state) occurs in the print processing of the print server, is put in the state waiting for a print recovery instruction from the user or the system administrator (step 1301). It should be noted that the print recovery instruction is issued from the print recovery 442 in the client to the print recovery service 542.

Receiving the print recovery instruction from the client, the print recovery service 542 determines whether the print recovery is to be made on the printer that failed or an alternative printer (step 1302).

In the former case, the print job stored in the print job pool 54 is taken out (step 1303). At this time, based on the job ID of the failed print job, the print job pool is searched for a corresponding print job to that job ID. Then, the corresponding print job is taken out of the print job pool and manipulated into a print job consisting only of the pages subsequent to the reprint start page (step 1304). This manipulating processing is called page extraction. After the page extraction, this print job is outputted to the second converting section 504 (step 1305).

In print recovery using an alternative printer, the print recover service 542 first takes out the print job stored in the print job pool 54 (step 1306). The print job is taken out by searching the print job pool for a corresponding print job based on the job ID of the failed print job. Next, page extraction is performed on the job thus taken out to convert the same into a print job consisting only of the pages subsequent to the reprint start page (step 1307). The resultant print job is outputted to the standard document file queue for the alternative printer (step 1308). The standard document file queue for the alternative printer is not always found on the same computer on which the print server performing the processing is installed. Therefore, this standard document file queue may be installed on a print server on another computer.

Thus, the print recovery from the failed page by use of the printer that failed and the print recovery by use of an alternative printer can be realized by the printing in an open environment. In addition, because printer troubleshooting is performed based on an integrated standard document file rather than depending on various PDL types, the page extraction processing conventionally prepared for various PDL types may only be prepared for the standard document file formats. As a result, this reduces the number of processes necessary for developing the page extraction processing. Further, conventionally, the alternative printer must be of the same type as the printer that failed or at least support the same PDL, limiting the scope of available alternative printers. However, in the above-mentioned embodiment, any printer of a type different from that of the printer that failed and that supports only another PDL can be used as an alternative printer. This significantly widens the application range of the failure recovery by use of an alternative printer.

When moving the print job from a printer that failed (hereafter referred to as a printer 1) to an alternative printer (hereafter referred to as a printer 2), attention should be given to the following point. Namely, a portion common to the printer 1 and the printer 2 must be used for a printer physical printable area for printing. This is to prevent a print result from being dropped by the alternative printing by the printer 2 if the physical printable area of the printer 2 is smaller than that of the printer 1. To support the user in this point, a configuration control capability is used to control the physical printable areas of the printers as a part of the print specifications of the printers as will be described in detail.

It should be noted that, in the present embodiment, two types of standard document files are provided, type-1 and type-2. These types may be integrated into either of the types. In this case, the converting capability 437 in the job transmitting capability 431, the first converting section 503, and the second converting section 504 may be omitted from the constitution, thereby enhancing the processing speed.

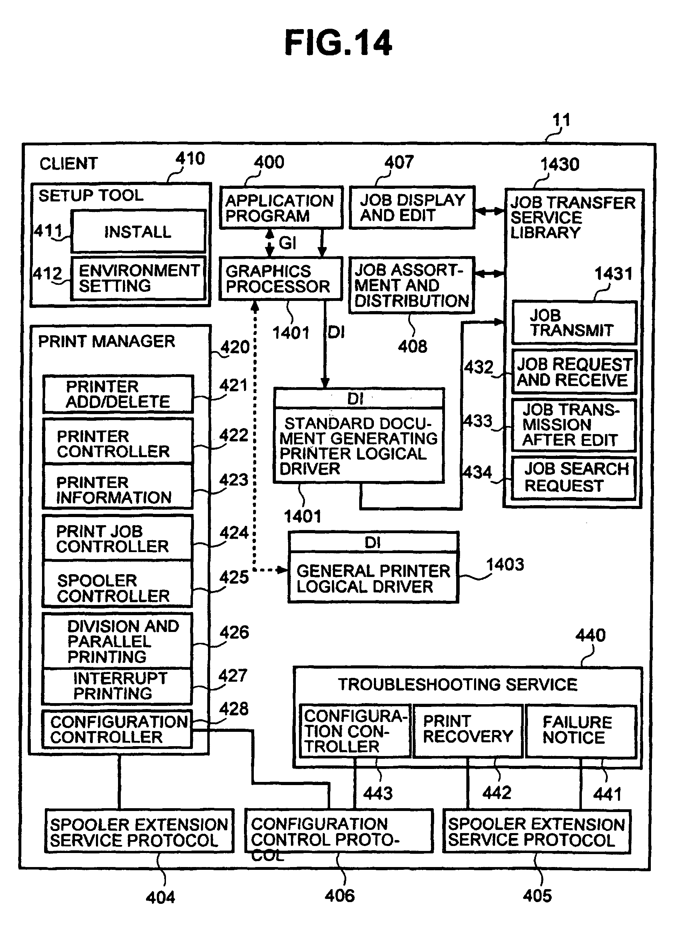

FIG. 14 is a diagram illustrating a functional constitution of a client in a second preferred embodiment of the present invention. Referring to FIG. 14, functional components similar to those previously described with the client shown in FIG. 4 are denoted by the same reference numerals. The following describes mainly the components different from those of the client shown in FIG. 4. It should be noted that the second embodiment does not use the distributed print control server 14 shown in FIG. 1 either.

The functional constitution of the client shown in FIG. 14 differs from that of the client shown in FIG. 4 in that the former has a printer logical driver generating standard document instead of the standard document file queue 402. This difference makes a graphics processor 1401, a general printer logical driver 1403, and a job transmitting capability 1431 of a job transfer service library 1430 function somewhat differently from the corresponding capabilities shown in FIG. 4.

The graphics processor 1401 sequentially receives documents of GI interface generated by the application program 400, converts the received documents into the API called DI (Device Interface), and sequentially inputs the converted documents into the standard document generating printer logical driver 1402.

The standard document generating printer logical driver 1402 converts the contents of each document received from the graphics processor 1401 through the DI interface into the document of standard document file format (hereafter sometimes simply referred to as fos) and stores the converted document into the standard document file queue 502 in the print server by use of the job transmitting capability 1431 of the job transfer service library 1430. Like the first embodiment, standard document file format denotes an integrated standard format independent of printer type. It should be noted that the format of standard document file used here is in conformity with the type-2 standard document file format described before.

The general printer logical driver 1403 is a functional element that generates a PDL document corresponding to each printer from the contents of the document written in DI interface and sends the generated document to the printer physical driver. The general printer logic driver 1403 provides, to the graphics processor 1401, the physical information about the printer to be actually used for printing, for example, top/bottom and left/right margins, the specifications of installed fonts, and the printer device information equivalent to that shown in FIG. 9 (equivalent to the print device information described with reference to FIG. 9). By use of these pieces of physical information, the graphics processor 1401 generates a document of DI interface from the document received from the application program 400.

The job transfer service library 1430 differs from the job transfer service library 430 shown in FIG. 4 in that the job transmitting capability 1431 does not have the format converting capability of the standard document (the converting capability 437 in FIG. 4). In the other points, the job transfer service library 1430 has the same capabilities as those of the job transfer service library 430 of FIG. 4.

It should be noted that, of these functional elements shown in FIG. 14, the division and parallel printing capability 426, the interrupt printing capability 427, and the configuration control capability 428 in the print manager 420, the configuration control capability 443 in the troubleshooting service 440, the job display and edit capability 407, the job assortment and distribution capability 408, and the configuration control protocol 406 are not especially used in the present embodiment.

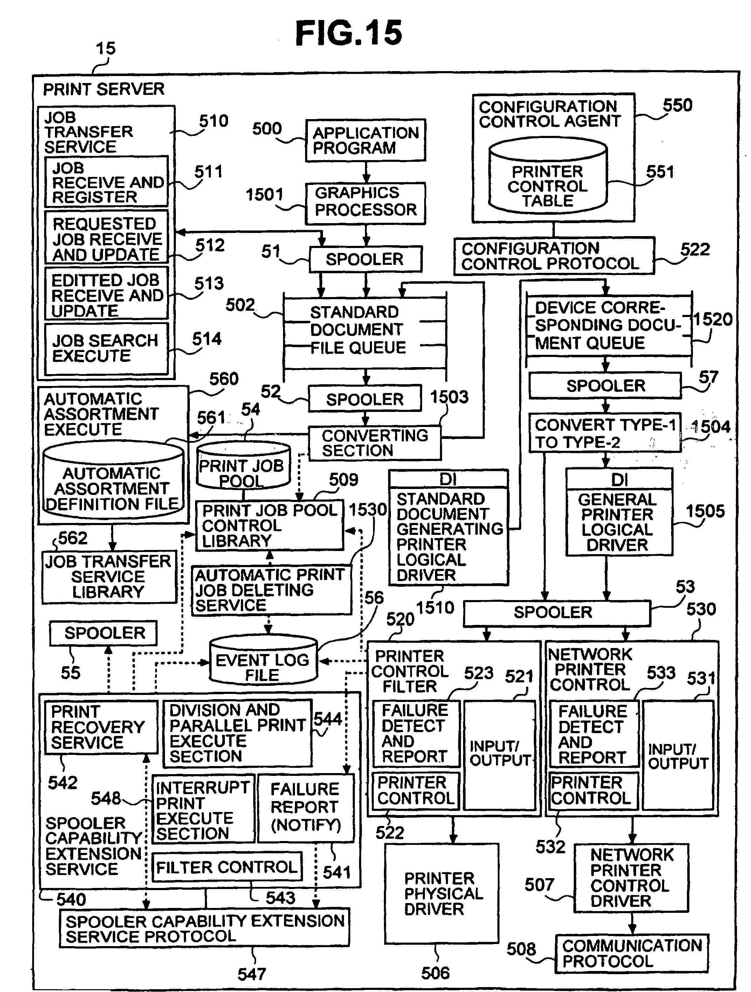

FIG. 15 is a diagram illustrating a functional constitution of the print server in the second embodiment. With reference to FIG. 15, functional components similar to those previously described with the print server shown in FIG. 5 are denoted by the same reference numerals. The following describes mainly portions different from the functional constitution of the print server shown in FIG. 5.

The present embodiment uses, for the format of a print job in the print server, a document file format partially different from the format of the print server shown in FIG. 5 as will be described later. This difference makes the graphics processor 1501, a first converting section 1503, a second converting section 1504, and a general printer logical driver 1505 have capabilities different from those of the corresponding functional components shown in FIG. 5. Besides, the above-mentioned difference also provides new capabilities such as a standard document generating printer logical driver 1510, a device corresponding document queue 1520, a spooler 57, and an automatic print job deleting service 1530. The job transfer service library 562 is equivalent to the job transfer service library 1430 of the client.

The graphics processor 1501 in the present embodiment converts the contents of the document received from the application program 500 through the GI interface into a document not of standard document file format but of device corresponding document file format (hereafter referred to also as fcd (file corresponding to device)) and stores the converted document into the standard document file queue 502. The fcd is a document file format written depending on printer type, in which page break is explicitly indicated but reprocessing on a page basis is difficult.

The first converting section 1503 performs the following processing according to the format of an inputted print job. First, if the format of the inputted print job is standard document file format, the first converting section 1503 converts the print job into fcd and stores the converted print job into the device corresponding document queue 1520. At this time, the first converting section 1503 stores the print job into the print job pool 54 in standard document file format by use of the print job pool control library 509. On the other hand, if the format of the inputted print job is the device corresponding document file format, the first converting section 1503 converts the print job into a document representation of DI interface and outputs the converted print job to the standard document generating printer logical driver 1510.

The standard document generating printer logical driver 1510 converts the contents of document of DI interface inputted into a document of GI interface. The document converted into GI interface is further converted into standard document file format to be outputted to the standard document file queue 502. The conversion from GI interface to standard document file format is performed by the job transmitting capability of the job transfer service library 562. Consequently, the print job locally generated by the application program 500 can be stored into the standard document file queue 502 in the format of standard document file.

The spooler 57 sequentially takes out the print jobs of device corresponding document file format from the device corresponding document queue 1520 and outputs these print jobs to the second converting section 1504.

The second converting section 1504 converts each received print job into a document representation of DI interface and outputs the result to the general printer logical driver 1505. The general printer logical driver 1505 converts the document of DI interface into the PDL format corresponding to the output printer and outputs the result to the spooler 53.

In the present printing system, the print jobs in the device corresponding document queue 1520 are not deleted even after being printed; these print jobs are stored for a certain time set by the system administrator. The stored print jobs are deleted by the automatic print job deleting service 1530. The automatic print job deleting service 1530 is started periodically to delete those print jobs which have exceeded a preset storage time starting from the normal end of printing stored in the device corresponding document queue. If a failure occurred on the printer, the storage time is made longer by the duration of the failure. If a print job in the print job pool 54 corresponding to a job in the device corresponding document queue 1520 is not found, that print job in the print job pool is deleted. Likewise, if a print job corresponding to a printed job stored in the device corresponding document queue 1520 is not contained in the print job pool, that print job is deleted.

Referring to FIG. 15, a division and parallel print executing section 544 and an interrupt print executing section 542 in a spooler capability extension service 540, a configuration control agent 550, a configuration control protocol 552, and an automatic assortment executing section 560 are not especially used in the second embodiment.

The data structure of each print job in the second embodiment is generally the same as that described with the first embodiment with reference to FIGS. 6 through 10. However, the value set to the data format 608 of the control file 600 is changed according to the format of the data file. The contents of the control file 600 are basically the same when being stored in the standard document file queue 502 and in the device corresponding document queue 1520. The contents of the data file 620 are different from each other when stored in the standard document file queue 502 or in the device corresponding document queue 1520. To be more specific, the page contents data 903 is different. For example, the page contents data of a data file stored in the standard document file queue 502 is of standard document file format for both local printing and remote printing after the conversion by the standard document generating printer logical driver, on the other hand, the page contents data of a data file stored in the device corresponding document queue 1520 is of device corresponding document file format.

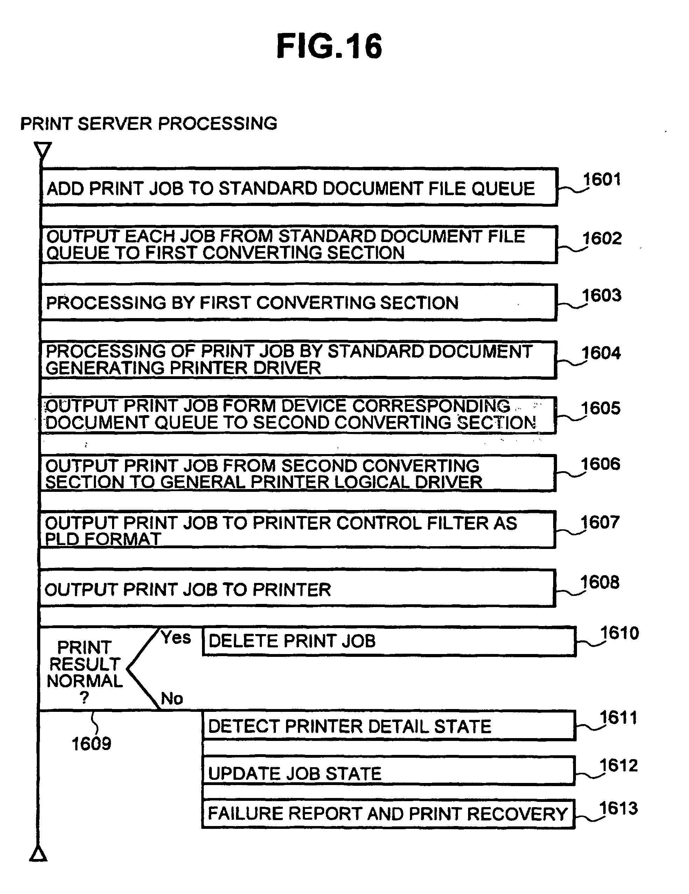

FIG. 16 is a flowchart indicative of print processing by the print server of the second embodiment.

First, the print server adds a print job to the standard document file queue 502 (step 1601). Here, the document generated by the application program 400 in the client is added as a standard document file. The document generated by the application program 500 in the print server is added as a device corresponding document file.

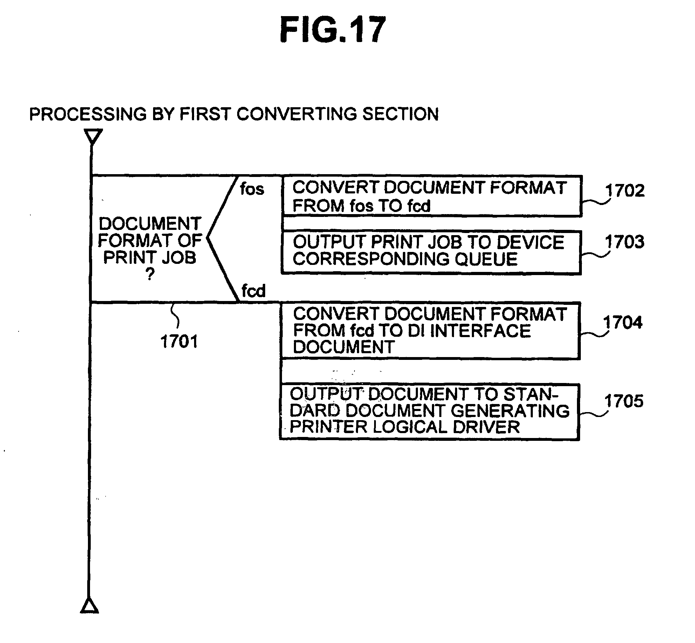

The print job added to the standard document file queue 502 is read by the spooler 52 to be passed to the first converting section 1503 (step 1602). The first converting section 1503 sequentially processes the print jobs thus received (2003). A flow of processing to be executed by the first converting section 1503 is shown in FIG. 17. As shown, the first converting section 1503 determines the document format of the received print job (step 1701). If the document format of the print job is standard document file format (fos), the first converting section 1503 converts the document format of the print job from standard document file format into device corresponding document file format (step 1702). Then, the first converting section 1503 outputs the converted print job of device corresponding document file format to the device corresponding document queue 1520 (step 1703).

On the other hand, if the document format of the print job is device corresponding document file format (fcd), the first converting section 1503 converts the document format of the print job from device corresponding document file format into a DI interface document (step 1704). Then, the first converting section outputs the converted DI interface document to the standard document generating printer logical driver 11510 (step 1705).

Subsequent to the processing by the first converting section 1503, in step 1604, the print server 15 converts the DI interface document outputted by the first converting section 1503 into a GI interface document by the standard document generating printer logical driver 1510. Then, by use of the job transmitting capability of the job transfer service library 562, the GI interface document is inputted in the standard document file queue 502 again as the print job of standard document file format (step 1604). The print job of standard document file format inputted in the standard document file queue 502 is inputted by the spooler 52 into the first converting section 1503 again and processed therein to be outputted to the device corresponding document queue 1520.

The print jobs thus stored in the device corresponding document queue 1520 are sequentially read by the spooler 57 to be outputted to the second converting section 1504 (step 1605). The second converting section 1504 converts the format of the print job from device corresponding document file format into DI interface document and outputs the resultant document to the general printer logical driver 1505 (step 1606).

The general printer logical driver 1505 coverts the format of the print job received from the second converting section 1504 into PDL format, which indicates the contents of print instruction corresponding to each printer, and outputs the resultant print job to the printer control filter (the printer control filter 520 or the network printer control filter 530) (step 1607). The printer control filter outputs the print job to the printer by use of the printer physical driver (the printer control filter 520 uses the printer physical driver 506 and the network printer control filter 530 uses the network printer control filter 507) (step 1608). Then, the printer control filter receives the result of printing of the print job by the printer driver to determine whether the result is normal or not (step 1609).

If the print result is found normal, the print job is deleted from the print job pool 54 by use of the capability of the print job pool control library 509 (step 1610). On the other hand, if the print result is found abnormal, the printer detailed state including detail failing state of the printer is detected (step 1611). Next, based on the detected printer detailed state, the job state is updated (step 1612). Like the first embodiment, job state includes "pending", "error", "in deletion", "in spool", "in printing", "off-line", "out of paper", "print completed", "in editing", "in moving", "in recovering" and "waiting for printing." Then, a failure report is sent to the client by use of a failure report capability 541 of a spooler capability extension service 540 and print recovery processing is performed on the printer that failed or an alternative printer by use of a print recovery service 542 (step 1613).

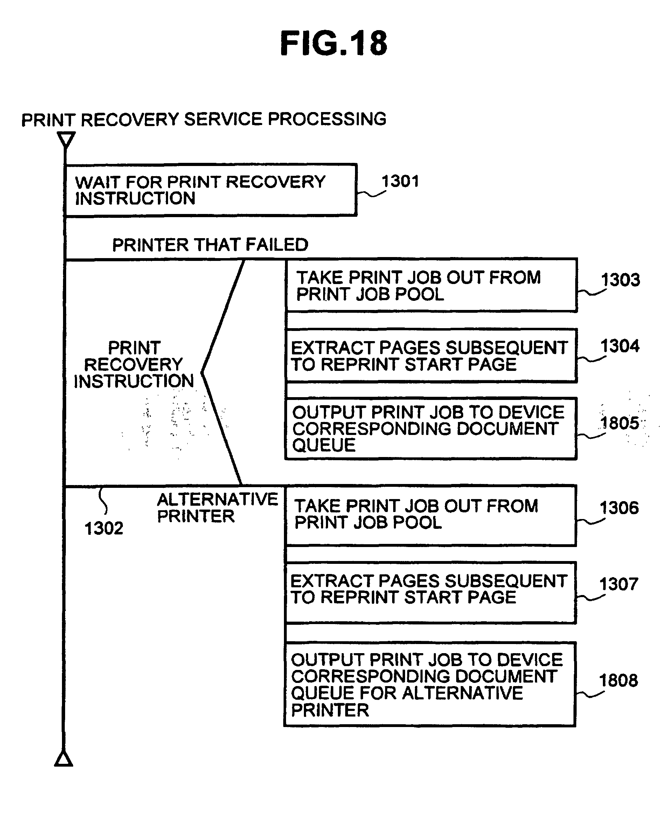

FIG. 18 is a flowchart indicative of a procedure of the print recovery processing by the print recovery service 542. The print recovery processing to be performed here also basically follows the same manner as that of the print recovery processing in the first embodiment shown in FIG. 13. Therefore, with reference to FIG. 18, processing steps similar to those previously described with FIG. 13 are denoted by the same reference numerals. A difference between the processing of FIG. 18 and the processing of FIG. 13 lies in that the output destination of the print job after page extraction in the print recovery processing on the printer that failed or an alternative printer is changed from second converting section (FIG. 13, step 1305) to a device corresponding document queue 1520 (step 1805) or from the standard document file queue for alternative printer (FIG. 13, step 1308) to the device corresponding document queue for alternative printer (step 1808). The other processing operations are substantially the same as those of the first embodiment.

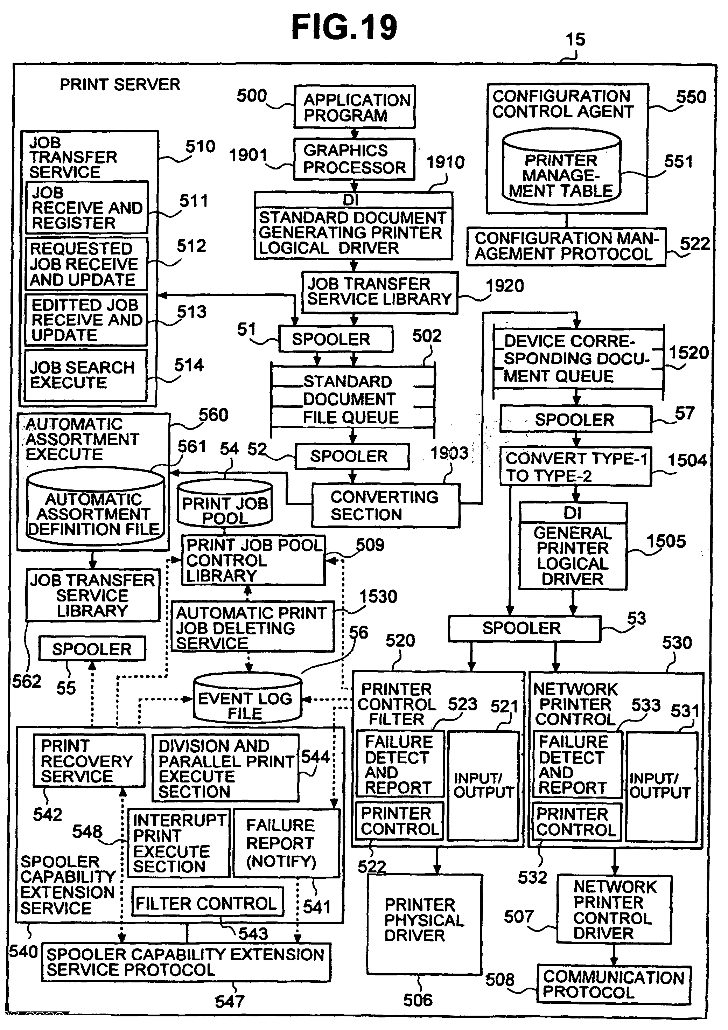

FIG. 19 is a diagram illustrating a functional constitution of the print server in which the position of the standard document generating printer logical driver 1510 of FIG. 15 is changed. In the print server shown in FIG. 19, the standard document generating printer logical driver is arranged between the graphic processor and the spooler 51. This arrangement causes the capabilities of the graphics processor and the first converting section to be partially different from those of the graphics processor 1501 and the first converting section 1503 shown in FIG. 15. Such a functional constitution also implements the same print service as that described above. It should be noted that, with reference to FIG. 19, functional components similar to those previously described with FIG. 15 are denoted by the same reference numerals.

A graphics processor 1901 sequentially receives GI interface documents generated by an application program 500, converts the received documents into API of DI interface, and sequentially outputs the resultant documents to a standard document generating printer logical driver 1910.

The standard document generating printer logical driver 1910 converts the contents of each document into a DI interface document and outputs the resultant document to a job transfer service library 1920. The job transfer service library 1920 converts the received GI interface document into standard document file (fos) format by use of the job transmitting capability and stores the resultant document into a standard document file queue 502. Consequently, in the print server shown in FIG. 19, the remote print job from the client and the local print job inside the print server are both stored in standard document file format into the standard document file queue 502 from the beginning. It should be noted that, referring to FIG. 19, a job transfer service library 562 is separately illustrated. However, the job transfer service library 562 need not be arranged separately. The job transfer service library 562 may be integrated in the job transfer service library 1920 or vice versa.

The first converting section 1903 sequentially receives the print job read by the spooler 52 from the standard document file queue 502, converts the format of each received print job into device corresponding document file (fcd), and stores the resultant documents into a device corresponding document queue 11520.

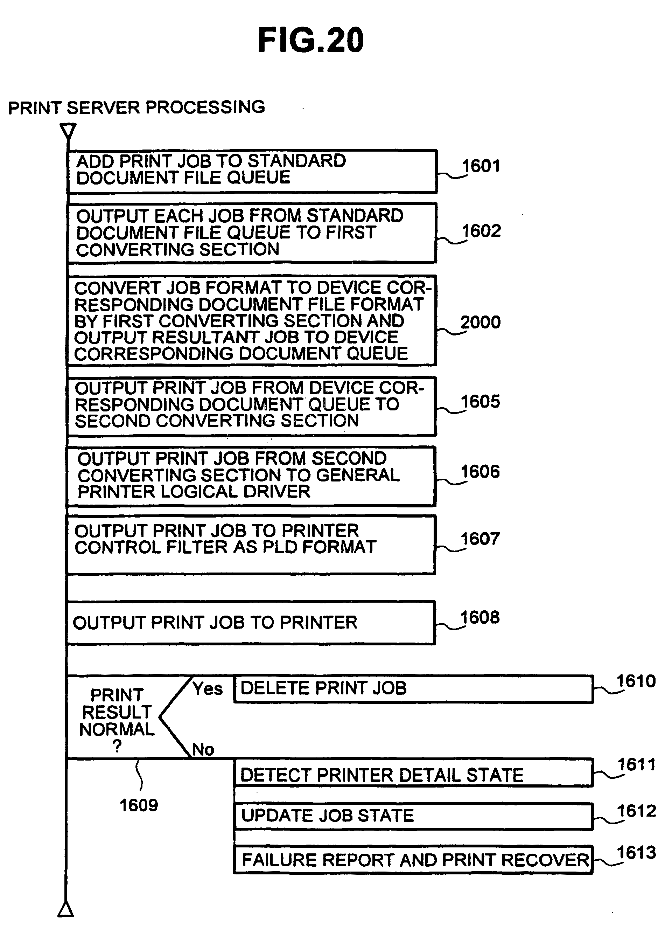

FIG. 20 is a flowchart indicative of the print processing of the print server shown in FIG. 19. Referring to FIG. 20, generally the same processing as that of FIG. 16 is performed except that processing of step 2000 to be performed by the first converting section 1903 is replaced with processing of step 1603 and 1604 of FIG. 16. Therefore, referring to FIG. 20, the processing steps other than step 2000 are denoted by the same reference numerals as those of the steps of FIG. 16.

First, in step 2000, the document format of a print job read from the standard document file queue 502 is converted by the first converting section 1901 from standard document file format into device corresponding document file. Then, the print job converting into device corresponding document file format is stored into the device corresponding document queue 1520. Next, the print job stored in the device corresponding document queue is processed following steps 1605 through 1613 to be printed by the printer.

The following describes details of processing to be performed when a printer failure occurs in the above-mentioned embodiment.

A printer failure is detected by the printer control filter 520 (or the network printer control filter 533, hereafter generically referred to as a printer control filter) by use of the printer physical driver 506 (or the network printer control driver 507, hereafter generically referred to as a printer control filter). When the printer control filter detects a printer failure on a print job, the printer control filter notifies the spooler 53 and so on of normal processing of the print job when the same has been deleted or recovered. Failure report is made to the user or the system administrator, if registered, who issued that print job of the client. For the system administrator, one of printer system administrator, print server system administrator, and system administrator of the entire printing system for example is registered as a system administrator to be notified of a failure report beforehand. It should be noted that the registration of system administrator is not essential for the present invention.

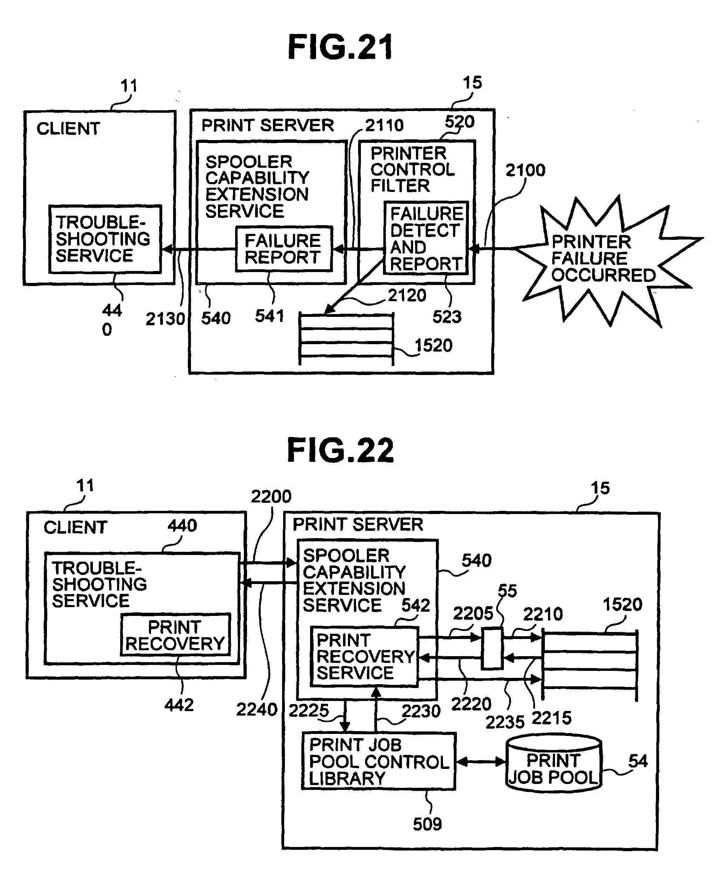

FIG. 21 is a schematic diagram illustrating a state of failure reporting between the client 11 and the print server 15 of FIG. 1 by way of example. In what follows, a failure of a printer directly coupled to the print server 15 will be described for example. The same processing is performed with a failure detected on a network printer.

When the printer control filter 520 detects a printer failure through the failure detect and report capability 523 (arrow 2100), the printer control filter notifies the failure reporting section 541 of the spooler capability extension service 540 of the occurrence of the failure (arrow 2110). Then, the printer control filter 520 put the state of the start print job in the device corresponding document queue 1520 into an error state (arrow 23-3). The failure report section 541 of the spooler capability extension service 540 reports printer failure information to the troubleshooting service 440 of the client 11, which is the computer being used by the user who has issued the print job (arrow 2130). This report includes a printer state, a printer name, a document name, and a user name. However, if the physical interface with the printer is of unidirectional and therefore return information from the printer is not sufficient, only macroscopic information about the occurrence of the failure is reported as the printer state. Detailed failure information (about the printer engine and the printer controller such as out-of-paper, improper paper size, occurrence of paper jam, number of jammed pages, printer cover open, and so on) cannot be reported. In the case of unidirectional interface, the document name and the user name are reported in addition to the printer state. Reporting to the system administrator of failure reporting can be made in one of the following modes (a) and (b).
(a) The report is made to all registered failure reporting system administrators.
(b) System administrators are divided into three groups; (i) printer system administrators' group, (ii) print server system administrators' group, and (iii) system administrators' group for the entire printing system, and failure reporting being made to (i), (ii), and (iii) in this order. Namely, if the printer system administrator registered, the reporting is made only to the printer system administrator not to the printer server system administrator, nor the system administrator for the entire printing system. If the printer system administrator is not registered but the print server system administrator is registered, the reporting is made only to the print server system administrator not to the system administrator for the entire printing system. If neither the print system administrator nor the print server administrator is registered, the reporting is made only to the system administrator for the entire printing system. If none of these system administrators are registered, no reporting is made to system administrators.

It should be noted that the reporting to the user who issued the print job is made independently of the reporting to the system administrator. A constitution may be provided in which, although the reporting has been made to the user who issued the print job but no instruction for print recovery comes from user over a certain period of time, the reporting may also be made to the system administrator.

FIG. 22 is a schematic diagram illustrating a procedure for print recovery by use of the printer that failed. In the print recovery by use of the printer that failed, the print recovery capability 442 in the troubleshooting service 440 of the client 11 requests the print recovery service section 542 of the spooler capability extension service 540 for instructing print recovery by use of the printer that failed (arrow 2200). The arguments for the print recovery instruction include "name of the printer on which the failure occurred (or failed printer name)", "job ID", "reprint printer name", "reprint start page", and "reprint last page." If the same name as "failed printer name" is specified for argument in "reprint printer name", the recovery processing procedure by the printer that failed is applied. If the other printer name is specified, recovery processing procedure by the alternative printer, to be described later, shall be applied.

Using "job ID" as a search key, the print recovery service 440 searches the device corresponding document queue 1520 for the print job via the spooler 55. To be more specific, the print recovery service 440 searches for the job that has the same job ID as the specified job ID in the job ID 601 (FIG. 6) of the control file. Then, the print recovery service obtains the job ID 602 for the print job pool of the control file as the job ID for the print job pool of this print job (arrows 2205, 2210, 2215, and 2220). Next, the print recovery service obtains the print job in the print job pool 54 having that job ID for print job pool, to be more specific, the contents of the control file and the name of the data file (arrows 2225 and 2230). Access to the print job pool 54 is made via the print job pool control library 509.

The print recovery service 542 performs the page extraction processing described before on the obtained data file. To be more specific, the print recovery service manipulates the print job of standard document file format stored in the print job pool into a print job that starts with the reprint start page and ends with the reprint end page. Then, the print recovery service 542 converts the page-extracted print job into device corresponding document file (fcd) format and stores the resultant document into the device corresponding document queue 1520 at the head thereof. Then, the print recovery service deletes the original job from the device corresponding document queue 1520 (arrow 2235). Further, the print server 15 assigns a new job ID to the newly stored print job for print recovery and sends the assigned job ID to the print recovery capability 442 of the client 11 (arrow 2240). Subsequently, the print server 15 performs the same print processing as that to be performed at normal time on the print job newly stored in the device corresponding document queue 1520, thereby printing the reprint start page through the reprint end page.

It should be noted that, when reprinting is required due to occurrence of error such as paper jamming, there are some printers which do not reprint from the failed page even if the cause of error, jammed paper for example, has been removed (this printer being called an A-type printer) and a printer that automatically reprints starting with the failed page when the cause of error has been removed (this printer is called a B-type printer). The print recovery processing described above is applicable to both the A-type and B-type printers but more effectively applicable to the A-type printer. It should be noted that many B-type printers tend to hold expanded image data until printing of each page is normally ended, thereby reducing print throughput as compared with A-type printers.

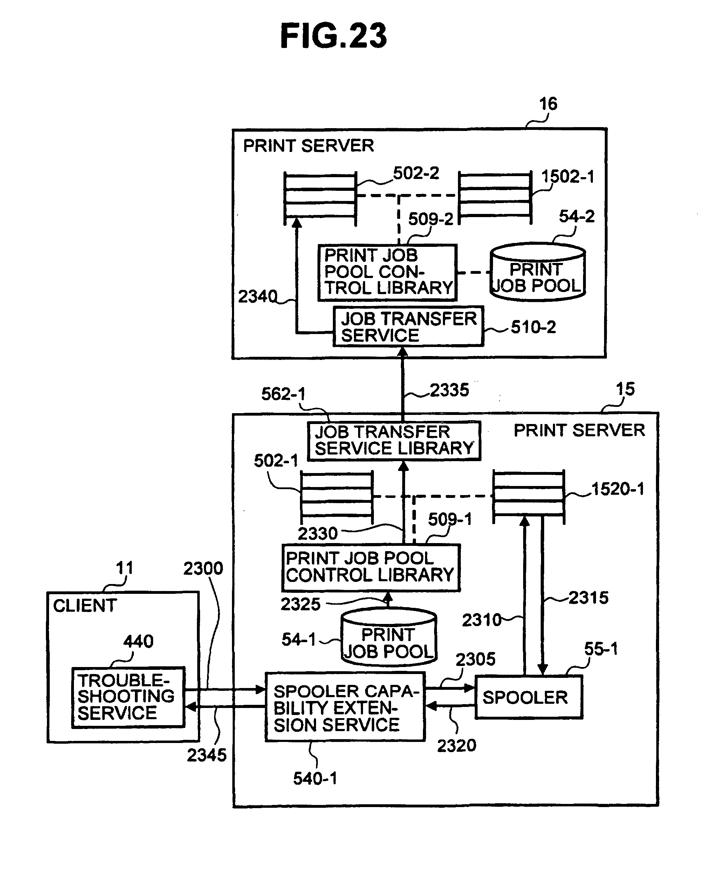

FIG. 23 is a schematic diagram illustrating a procedure of the print recovery by use of an alternative printer. FIG. 23 shows a print recovery procedure for use in the case where a print job to be printed on a printer with which the print server 15 of FIG. 1 is to perform print service is substituted by a printer with which the print server 16 is to perform print service. Moving of the print job to the queue for the alternative printer, which is key to the printing by the alternative printer, is performed by the print recovery service section of the spooler capability extension service 540.

In the print recovery procedure by use of the alternative printer, a request for instructing print recovery is sent by the print recovery capability of the troubleshooting service 440 of the client 11 to the print recovery service section of the spooler capability extension service 540 (arrow 2300). Like the print recovery by use of the printer that failed as described above, the arguments included in the recovery instruction include "printer name that failed", "job ID", "reprint printer name", "reprint start page", and "reprint last page." If the name of a printer other than the printer that failed is specified in the argument for "reprint printer name", the following recovery processing is performed with the printer having the specified "reprint printer name" used as an alternative printer.

Based on the job ID, the print recovery service 440-1 obtains the contents of the control file and the name of the data file of the print job to be recovered like the print recovery processing by use of the printer that failed described above (arrows 2305, 2310, 2315, 2320, and 2325). Next, the print recovery service moves the obtained print job to the standard document file queue 502-2 for the alternative printer. To be more specific, the print recovery service sets the reprint start page and the reprint end page to the control file of the obtained print job of standard document file format and stores the resultant print job into the standard document file queue 502-2 for the alternative printer. The storing of the print job into the standard document file queue is performed by use of the job transmitting capability of the job transfer service library 562-1 of the print server 15 and the job receive and add capability of the job transfer service 510-2 of the printer server 16 (arrows 2330, 2335, and 2340). If a printer controlled by the same print server that controls the printer that failed is used, the print job is transferred between the job transmitting capability and the job receive and add capability in that print server. Then, original, failed print job is deleted from the device corresponding document queue 1520-1.

The print server assigns a new job ID to the print job for print recovery stored in the standard document file queue for the alternative printer and sends the new job ID to the print recovery section of the troubleshooting service 440 of the client 11 (arrow 2345). The print recovery service 542 registers the moving of the print job to the event log file 56. Of the device information associated the print job (FIG. 7), the print server that performs reprinting sets the information other than the reprint start page and reprint end page set at the source of the moving. Of the device information, the name of the alternative printer is set to the printer device name. The other information associated with print specifications (hereafter referred to as print specifications information) is set by either the automatic setting mode or the interactive setting mode.

In the automatic setting mode, if the printer at the destination of the moving supports the printer specifications information of the printer at the source of the moving, the value of the print specifications information is set without change. If the printer at the destination of the moving does not support the print specifications information of the printer at the source of the moving, the value is set to the default of the print specifications information of the printer at the destination of the moving. In this case, the print result is uncertain. On the other hand, in the interactive mode, the user selects desired print specifications information at moving the print job by use of the general printer logical driver corresponding to the printer at the destination and the selected information is set to the device information. For a document having different page sizes for different pages, the automatic change mode is preferable because this mode requires less user setting load. It should be noted that the print specifications information is used when the first converting section 1503 (1903) converts the format of a document from standard document file format (fos) to device corresponding document format (fcd).

The print jobs moved to the standard document file queue for the alternative printer are sequentially taken out by the spooler 52 and processed by the capabilities subsequent to the first converting section in the same manner as that for normal printing, in which the document is printed from the reprint start page to the reprint end page by the alternative printer. It should be noted that manipulation of the print job of standard document file format by page extraction into a print job that starts with the reprint start page and ends with the reprint end page is performed by the first converting section 1503 (1903) based on the reprint start page and end page set to the device information. The contents of the actual processing for page extraction are the same as those of the reprinting by use of the printer that failed.

It should be noted that the above description has been made mainly by use of the case in which the print manager for controlling the printer that failed is different from the print manager for controlling the alternative printer. The recovery processing can also be realized likewise if the printer that failed and the alternative printer are controlled by the same print manager. The above-mentioned printer troubleshooting processing is also applicable to the first embodiment.

Like the first embodiment, the second embodiment described above can be realized that the print recovery subsequent to the failed page by use of the printer that failed and the print recovery by use of an alternative printer in the open environment. Because the second embodiment supports printer troubleshooting processing based on a unified standard document file independent of various PDL types, the page extraction processing, which is conventionally prepared for each PDL, may be prepared only for standard document file format. This constitution significantly reduces the number of processes for developing the page extraction processing. In addition, conventionally, an alternative printer must be of the same type as that of the printer that failed or at least support the same PDL as that of the printer that failed, so that the printers available for the alternative printer are restricted. The above-mentioned embodiment, however, can use any printers that are different in type from the printer that failed and only support other PDLs. This significantly widens the application range of the print recovery using alternative printers.

In the above-mentioned first and second embodiments, a print job on which a printer failure occurred is moved to the print queue for an alternative printer and print recovery is performed on that alternative printer. It is also practicable that a print job before the occurrence of a failure is moved from the print queue (a standard document file queue or a device corresponding document queue) in which that print job is stored to the print queue for another printer for printing.

The following describes, as a third preferred embodiment, an interrupt printing operation in which one print job is divided into plural print jobs to concurrently print these plural print jobs on different printers, which is called a division and parallel print capability, and the execution of a print job is interrupt by another print job, which is called an interrupt printing capability. These capabilities and processing operations are realized by the division and parallel print capability 426 and the interrupt printing capability 428 of the client shown in FIGS. 4 and 14 and the division and parallel print executing section 544 and the interrupt print executing section 542 of the print server shown in FIGS. 5, 15, and 19. In what follows, an example in which uses the client and the print server shown in FIGS. 4 and 5 is described. This holds true with the second embodiment in which the client shown in FIG. 14 and the print server shown in FIGS. 15 and 19 are used.

For division and parallel print processing, the user of the client performs preparations for this processing and instructs a division and parallel print operation by use of the division and parallel print capability 426. In the preparation for division and parallel print, a collection of printers for use in a parallel print operation is defined as a printer group. For example, printer group A is defined as a set of printer A1, printer A2, ..., printer Am and printer group B is defined as a set of printer B1, printer B2, ..., printer Bn. In instructing a division and parallel print operation, the application program 400 selects a printer group (for example, printer group A) and instructs printing to the selected printer group as if it were a single printer. It should be noted that the definition of a printer group may be made in print instruction rather than in the preparation.

In the print server, a print job transferred from the client to the standard document file queue 502 is read to the first converting section 503. The first converting section 503 first determines whether the received print job is for an ordinary single printer or for a printer group. If the print job is for an ordinary single printer, the print processing is executed according to the procedure described above with reference to the first and second embodiments. If the print job is for a printer group, the first converting section 503 outputs that job to the division and parallel print executing section 542.

The division and parallel print executing section 542 divides the received print job into plural print jobs corresponding to the printers A1, A2, ..., Am constituting the printer group A specified as output printers. In what follows, the divided jobs are referred to as partial job 1, partial job 2, ..., partial job m. These partial jobs have the same format as that of an ordinary print job. The division and parallel print executing section 542 stores the partial job 1, partial job 2, ..., partial job m into the standard document file queues for printer A1, printer A2, ..., printer Am. To be more specific, the division and parallel print executing section requests the job transfer service 510 through the transmitting capability of the job transfer service library 562 to store the partial jobs into the standard document file queues for the printers. According to this request, the job transfer service stores the partial jobs into the corresponding standard document file queues through the job receive and register capability 511. It should be noted that, if a printer for printing a partial job is controlled by another print server, that partial job is transferred to the standard document file queue for that print server. Subsequently, the same processing as that of an ordinary print job is performed on each partial job, printing the partial jobs by the specified printer group.

Performing the division and parallel print processing as described above enhances print throughput not by a costly high-performance printer but by plural low-speed, low-cost printers. Use of standard document file format as the document format of each partial job eliminates the need for developing the division and parallel print capability for each PDL, lowering the development cost for realizing the division and parallel print processing. Further, use of standard document file format facilitates to constitute a printer group for use in the division and parallel print processing by plural printers of different types, thereby making it practicable to constitute the printer group by arbitrarily combining plural printers in use by users.

The interrupt print processing is performed as follows. If a printer to be used by the user is processing another print job, the user starts the interrupt printing capability 427 to instruct an interrupt printing operation by that printer. Whether a particular printer is in use or not can be known by sending an inquiry to the print server through the client about the print state. It should be noted that the user who can use interrupt printing is limited to the user who has issued a print job in processing (to be interrupted by an interrupt print job) and the system administrator. The following description assumes that a print job to be interrupted by interrupt printing be print job A and a print job to be processed by interrupt printing be print job B.

The interrupt printing capability 427 requests the print server for an interrupt printing operation through the spooler extension service protocol 404. The interrupt print executing section 542 of the print server receives this request through the spooler extension capability service protocol 547 and discontinue print job A being executed. If the printer is processing print job A, the printing processing of printer A is aborted by use of the canceling capability of the printer physical driver 506. Next, the interrupt print executing section 542 obtains the print end page of print job A by the printer from the printer physical driver 506.

Upon interruption of print job A, the processing of print job B starts. Print job B is printed according to the print processing procedure described above.

The interrupt print executing section 542 detects the completion of printing of print job B by the printer by use of the print completion monitoring capability of the printer physical driver 506. In the present printing system, a multitask control operating system is installed on the print server and the completion of printing is detected when the interrupt print executing section 544 is taken out of the print completion waiting state. Upon detection of the completion of print job B, the interrupt print executing section 542 performs page extraction processing on interrupted print job A to generate document data that starts with a page next to the print end page obtained before, thereby restarting output of print job A to the printer.

It should be noted that, if the printer has plural paper eject sections, print job A and print job B may have different paper eject section (called a bin, a tray, or a deck), thereby preventing the printed sheets of print job A and print job B from being mingled. In addition, if printer A has more than enough paper eject sections, an extra paper eject section or sections may be allocated to interrupt printing.

Performing interrupt printing as described above allows a print job of a small quantity to interrupt a print job of a large quantity for example, thereby significantly enhancing ease of use. In addition, interrupt printing eliminates the need for preparing extra printers for an interrupting print job unlike the conventional system having no interrupt printing capability, thereby reducing the system cost.

The following describes, as a fourth preferred embodiment of the invention, a method of making the print service capability provided by the print server more sophisticated by providing a capability (hereafter referred also to a configuration control capability) of collectively controlling the specifications and states of all printers and servers within a network. The capability to be described hereunder is realized by the distributed printing control server 14 shown in FIG. 1, the configuration control capabilities 428 and 443 and the configuration control protocol 406 of the clients shown in FIG. 4 and FIG. 14, and the configuration control agent 550 and the configuration control protocol 552 of the print servers shown in FIG. 5, FIG. 15, and FIG. 19. It should be noted that, in the fourth embodiment, the distributed printing control server 14 is installed in a computer other than the clients 11 through 13 and the print servers 15 and 16. The distributed printing control server may be installed on a client or a print server. However, because the distributed printing control server is a type of server for providing printing service, the distributed printing control server is preferably installed on a print server.

These functional components realize, in the printing system of the embodiments described so far, (a) capability of displaying printer constitution, (b) capability of searching printers adapted to the print specifications provided by the user, (c) capability of searching, based on the print specifications of the failed print job, alternative printers for performing a printing operation for the printer that failed, and (d) capability of displaying the specifications and states of the above-mentioned printers. A specific method of realizing the capabilities (a) through (d) is disclosed in Japanese Patent Laid-open No. Hei 7-230372 or Japanese Patent Laid-open No. Hei 7-3067674 by the inventor hereof and et. al. It should be noted that, in the present embodiment, at adding or deleting a printer, the information about printer constitution can be automatically changed for continued processing without stopping the distributed printing control server and the print server, thereby preventing the printing system from being stopped at adding or deleting the printer. In addition, each print server monitors the distributed printing control server and, if the distributed printing control server is found not established, print service is executed without the configuration control capability. When the distributed printing control server is found established, all print services including the configuration control capability are supported, thereby allowing the system to continue operating even when the distributed printing control server is in the stopped state.

The following describes an user interface provided by each of the above mentioned capabilities.

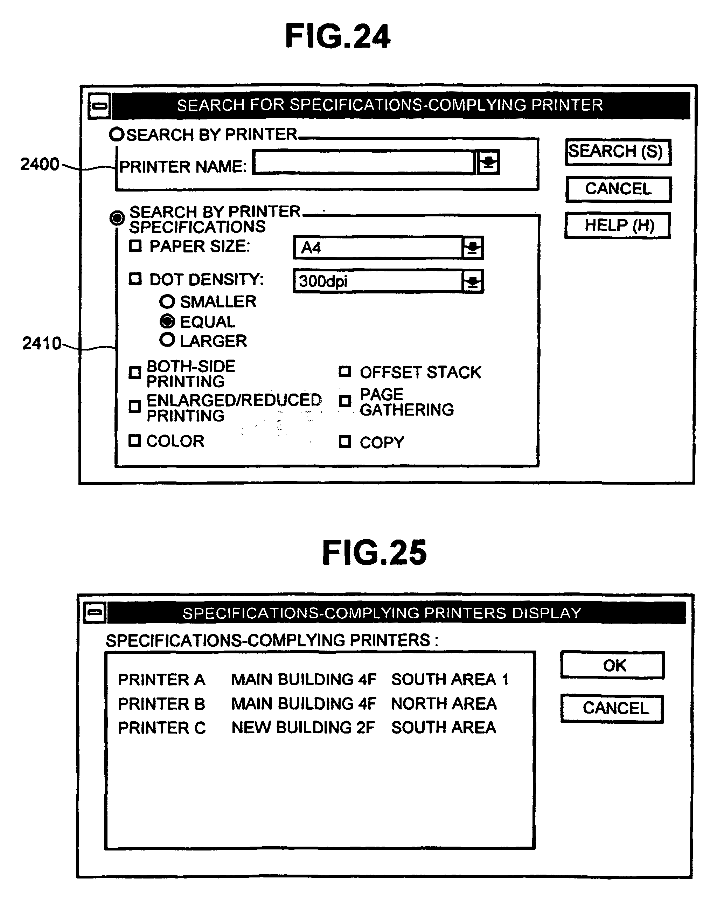

FIG. 24 shows an example of a dialog box that serves as a user interface provided by the configuration control capability for searching a printer or an alternative printer adapted to necessary specifications. In response to a request or the like from the user, the client displays, as required, a dialog box titled "Searching for Specifications-complying Printer" as shown by use of the configuration control capability 428 of the print manager 420. Through this dialog box "Searching for Specifications-complying Printer", the user can search for a printer having the specifications adapted to a search key used, which is a printer name or printer specifications. For searching by a printer name, the user selects "Search by Printer Name" 2400 in the dialog box and specifies a printer name or selects a printer from a list of printers. The configuration control capability retrieves printers complying with the specifications of the specified or selected printer and displays a list of retrieved printers as shown in FIG. 25. Seeing the displayed list of specifications-complying printers, the user can recognize whether each printer is available (connected) or unavailable (disconnected). It is assumed here that search conditions for specified printers be the search conditions set when each printer was added to the list by the printer add/delete section 421.

For search by printer specifications, the user selects "Search by Printer Specifications" 2410 in the dialog box and sets information associated with the following conditions.

### - "Paper Size" check box

This check box specifies whether or not paper size is used for search keyword. If paper size is used as search keyword, the user selects a paper size to be searched for. If paper size is used for search keyword, printers supporting the specified paper size are retrieved.

### - "Dot Density" check box

This check box specifies whether or not dot density is used for search keyword. If dot density is used for search keyword, the user selects a dot density to be searched for. Further, the user searches or specifies, in comparison with the print job, one of dot densities corresponding to a printer having a smaller dot density than the print job ("Smaller" radio button), a printer having an equal dot density ("Equal" radio button), and a printer having a larger dot density ("Larger" radio button).

### - "Both-side Printing" check box

This check box specifies whether or not both-side printing is used for search keyword. If both-side printing is used for search keyboard, printers that can print both sides of paper are retrieved.

### - "Enlarged/Reduced Printing" check box

This check box specifies whether or not enlarged/reduced printing is used for search keyword. If enlarged/reduced printing is used for search keyword, printers that can print in enlarged/reduced mode are retrieved.

### - "Color" check box

This check box specifies whether or not color printing is used for search keyword. If color printing is used for search keyword, printers that can print in color are retrieved.

### - "Copy" check box

This check box specifies whether or not copy capability is used for search keyword. If copy capability is used for search keyword, printers having copy capability of printing plural copies of a page are retrieved.

### - "Offset Stack" check box

This check box specifies whether or not offset stack printing is used for search keyword. Offset stack denotes a plurality of paper eject sections.

### - "Page Gathering" check box

This check box specifies whether or not page gathering printing is used for search keyword.

Of the above-mentioned printer specifications, only the printer specifications that have been set provide the search keywords. The printers that satisfy all of the search keywords that have been set are retrieved as specifications-complying printers. In an actual search operation, the user sets these pieces of information and then presses "Search" button. In response, by use of the configuration control capability, the client searches for the printers having specifications adapted to the piece of information that have been set. A result of the search is displayed in a list of printer names and printer installation locations as shown in FIG. 25. For the printer installation locations, those registered beforehand at adding printers to the printing system by the printer add/delete capability 421 of the print manager 420 are displayed.

The following describes a user interface for use in printer troubleshooting.

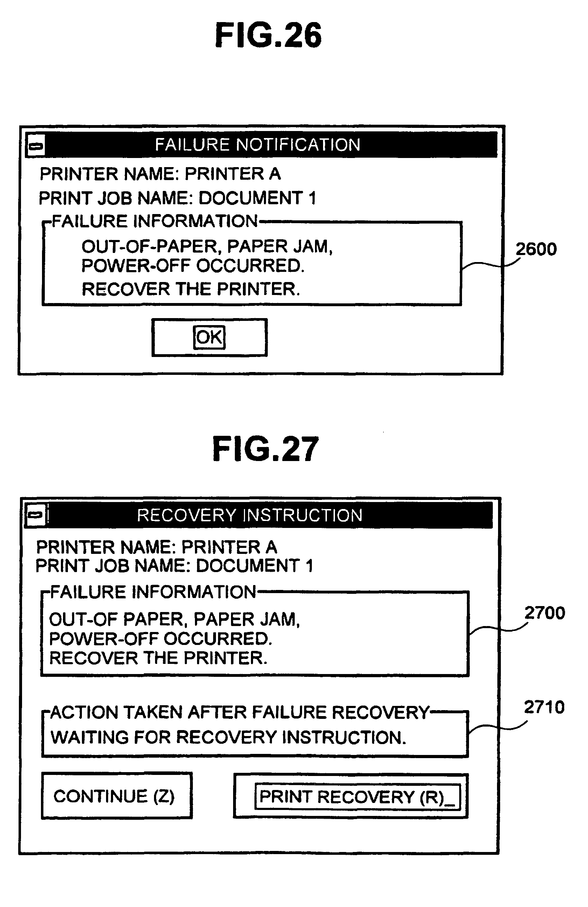

FIG. 26 is a display example of printer failure information to be sent to the user or a system administrator of the client. In failure notification, the contents of a detected failure are displayed as failure information 2600. However, if the user defined as the destination of failure notification is not logging on the client computer, failure information is not notified.

The user or the system administrator notified of failure information instructs print recovery processing through "Recovery Instruction" dialog box shown in FIG. 27 for example. Alternatively, automatic recovery may be executed according to a preset print recovery method instead of displaying "Recovery Instruction" dialog box. In print recovery processing, the user or the system administrator may instruct test printing and reprinting starting from any desired page by use of the printer that failed (the printer recovered from failure) or an alternative printer.

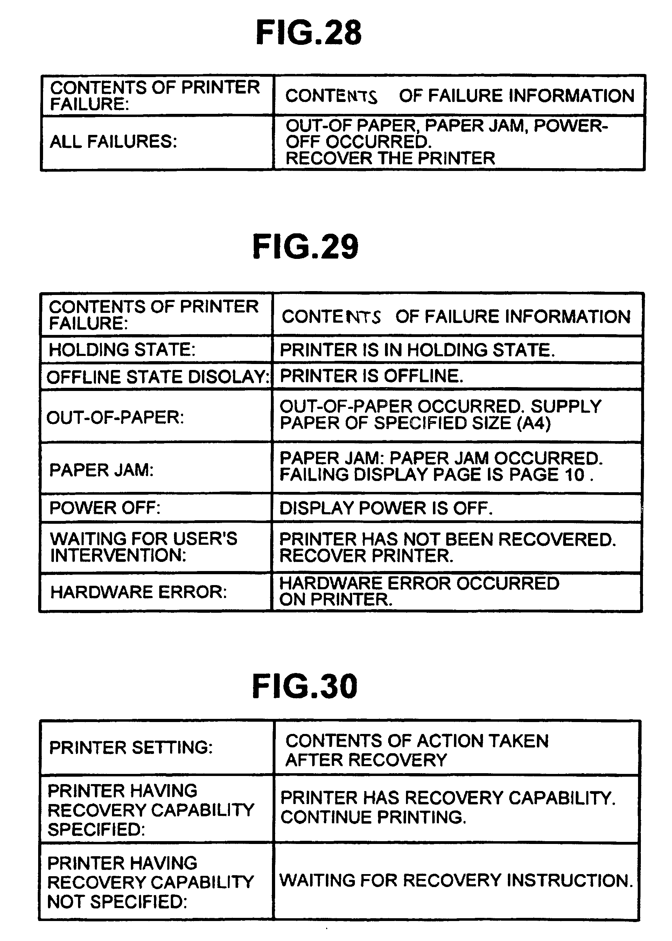

In "Recovery Instruction" dialog box, failure information 2700 and action-taken information 2710 after failure recovery are displayed. For the failure information 2700, the contents of a detected failure are displayed like the failure information 2600 that is shown in failure notification. It should be noted that the contents of failure information depend on whether the interface between printer and printer server is of unidirectional or bidirectional. If the interface is of unidirectional, same information is used for failure information of all failures as shown in FIG. 28. If the interface is of bidirectional, failure information (column 2910) corresponding to the contents (column 2900) of printer failure is used as shown in FIG. 29.

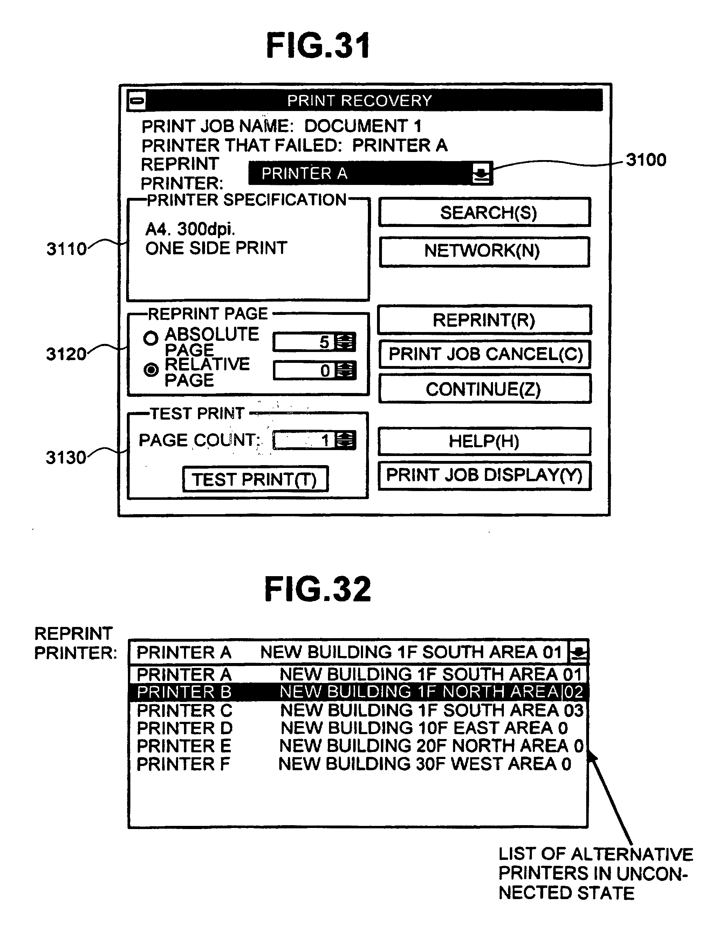

The contents of the failure information to be provided as the action-taken information 2710 after failure recovery depend on whether the printer is set (column 3000) as a printer having recovery capability or as a printer having no recovery capability as shown in FIG. 30. In "Recovery Instruction" dialog box, selecting "Continue" does not cause the print server to perform print recovery but the recovery capability incorporated in the printer to resume printing from the position of failure. On the other hand, if the user selects "Print Recovery", "Print Recovery" dialog box shown in FIG. 31 appears.

In "Print Recovery" dialog box, the name of the print job that failed ("Print Job Name") and the name of the printer that failed ("Faulty Printer") are displayed. Through "Reprint Printer" 3100, the user specifies the name of a printer for reprinting. "Reprint Printer" 3100 has the name of the printer that failed as default information. . The user can set a reprint printer by either selecting the reprint printer button to display a list of alternative candidate printers (complying with specifications) and then selecting the reprint printer or selecting "Search" button or "Network" button to search for alternative printers by use of the configuration control capability of the printing system and selecting the reprint printer from among the retrieved alternative printers. In each one of these selecting methods, the alternative printer candidates are displayed in a form shown in FIG. 32. If "Search" button is selected, the above-mentioned "Search for Specifications-complying Printer" dialog box (FIG. 24) is displayed. By use of "Search for Specifications-complying Printer" dialog box, the user searches for printers having desired specifications to obtain a list of the retrieved alternative printer candidates, from which a reprint printer is selected. If "Network" button is selected, reprinting can be performed on an unconnected alternative candidate printer or a printer other than specifications-complying printers. However, if test printing or reprinting is performed on a printer other than specifications-complying printers, the result cannot be ensured. Printer specifications information 3110 displays the information about the specifications of the printer selected for reprinting.

Reprint page 3120 specifies, in relative page or absolute page, a page (reprint start page) with which reprinting or test printing starts. "Absolute Page" displays as default an absolute page at which failure occurred. In "Absolute Page", the user can specify the first page to be reprinted in absolute page number of the document, reprinting starting with the specified page. "Relative Page" displays 0 as default, setting the page at which failure occurred being the origin. Specifying the print start page in relative page allows the user to specify a print start page relative to the page at which failure occurred.

"Page Count" button in the test printing 3130 specifies the number of pages to be test printed. The print recovery capability 442 adds the number of pages specified here to the reprint start page and sets a value obtained by subtracting 1 from the result of the addition to the device information as a reprint end page. When "Test Print" button is specified, the pages starting with the reprint page are test printed.

When "Reprint" button is specified, reprinting is performed from the page specified in the reprint page 3120 to the last page of that document. When the reprinting is ended properly, "Print Recovery" dialog comes to an end.

"Print Job Cancel" button is selected to cancel print recovery. When the user selects this button, the reprint job is aborted. At completion of the cancel processing, "Print Recovery" dialog comes to an end.

When "Continue" button is selected, the print recovery processing by the troubleshooting service 440 is not performed. Printing from the position of failure is continued by the recovery capability incorporated in the printer.

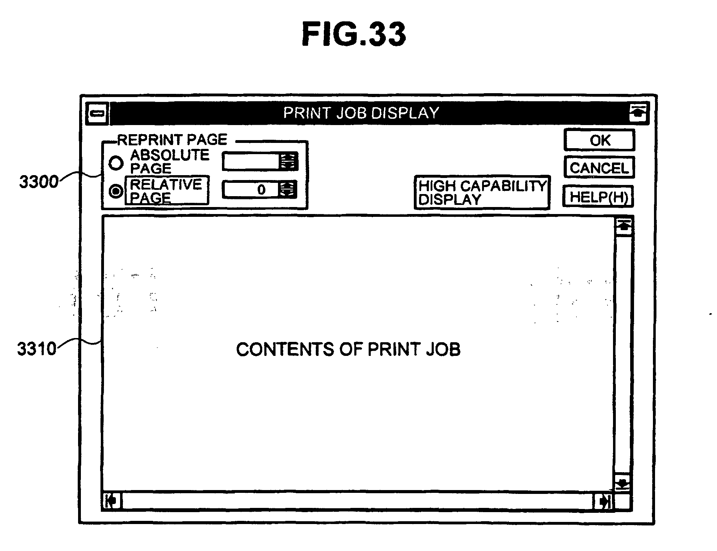

When "Print Job Display" button is selected, a page corresponding to a reprint page (a reprint start page) is displayed through "Print Job Display" window shown in FIG. 33. In "Print Job Display" window, the user can perform the following operations. The user specifies a page number to be displayed in absolute page number or relative page number in the reprint page 3300. "Absolute Page" displays as default the page of failure in absolute page number. "Relative Page" displays 0 set as default. The origin of "Relative Page" is the page at which failure occurred. Area 3310 of "Print Job Display" window displays a page corresponding to the reprint page. When the user selects "OK" button, the page specified in the reprint page 3300 is stored and the processing goes back to "Recovery Instruction" dialog. At this moment, the page specified in the reprint page 3300 is reflected onto the reprint page 3120. "Cancel" button is selected when the user wants to cancel the specification of the reprint page made in "Print Job Display" window and return to "Recovery Instruction" dialog. Therefore, in this case, the page specified in the reprint page 3300 is not reflected onto the reprint page 3120.

By selecting "High Capability Display" button in "Print Job Display" window, the user can start the job display and edit capability of the printing system to use the job display capability of the capabilities provided by the job display and edit capability. The page display by the job display and edit capability provides the page that was being displayed when "High Capability Display" button was selected.

If a response by the user to the "Recovery Instruction" dialog box exceeds a certain predetermined time (this time being called a monitor time), the troubleshooting service 443 performs the processing defined as automatic recovery. In the automatic recovery processing, if the printer has the recovery capability, printing is resumed from the position of failure by use of that recovery capability. Alternatively, the printer is paused and then the print job is canceled to end the recovery processing.

Thus, providing the configuration control capability for controlling in a unified manner the specifications and states of the all printers and print servers in a network facilitates the configuration control and troubleshooting of the printing system by the user and system administrator.

The following describes as a fifth preferred embodiment a job display and edit capability, a job assortment and distribution capability, and an automatic assortment capability for print jobs having standard file format of the printing system. These capabilities and processing operations are realized by the job display and edit capability 407 and the assortment and distribution capability 408 of the clients shown in FIGS. 4 and 14 and the automatic assortment executing section 560 of the printer servers shown in FIGS. 5, 15, and 19.

The job display and edit section 407 performs a job display and edit operation in the following procedure. First, based on an instruction given by the user, the job display and edit section takes a print job (a document of standard document file format) from the standard document file queue 502 by use of the job request and receive capability 432 of the job transfer service library 430. At this moment, the job request and receive capability 432 specifies the print job in a combination of print server name, printer name and job ID. It should be noted that pieces of information that can specify print jobs can be combined any way for the specification or other information may be used for the specification. Of the jobs taken out, the job display and edit section 407 displays the page specified by the user onto the screen of the client. Then, the job display and edit section 407 performs editing operations such as memo writing on the extracted print job and check marking by the user and incorporates the result into a print job of standard document file format. This updating of the print job is performed by use of an edit record in the page data. The updated print job is written by the job transmitting capability 433 after editing to the standard document file queue 502 of the print server.

In the above-mentioned processing, taking out, display, editing and writing to the standard document file queue after editing are performed in unit of a print job. Taking out, display, editing, and writing to the standard document file queue after editing (the writing method is divided into insertion and replacement) may also be performed in unit of a particular page in one print job. It should be noted that, before taking out a print job or a page, the user may retrieve a desired print job or page by use of the job search request capability 434. In the retrieval on a print job basis, all print jobs stored in the standard document file queue 502 may be searched for. In the retrieval on a page basis, a specified particular print job in the standard document file queue 502 may be searched. For example, for the retrieval on a page basis, the job search executing section 514 searches the search start page through the search end page of the specified print job for a page including a character string matching with a specified character string, or a page satisfying a condition given with a value of specified character string. The job search executing section 514 then returns the page number of the retrieved page to the job search request capability 434.

The above-mentioned job display and edit capability allows the user to display the contents of the print job for editing without performing actual printing by the print job.

The job assortment and distribution capability 408 performs job assortment and distribution processing in the following procedure. First, according to an instruction given by the user, the job assortment and distribution capability 408 takes out a print job (a document of standard document file format) from the standard document file queue 502 by use of the job request and receive capability 432 of the job transfer service library 430. At this moment, the job request and receive capability 432 specifies the print job in a combination of print server name, printer name, and job ID like the job display and edit processing. Then, the job request and receive capability sequentially displays all pages of the print job taken out and receives from the user the name of a printer to which each page is outputted. The job assortment and distribution capability 408 links the document data corresponding to each page specified with its output printer to each output printer and defines the document data as a partial job for each output printer. This processing is called assortment. In the present embodiment, each print job is written in standard document file format that is independent of printer type, so that the contents of each print job can be analyzed by a processing system separate from printers. In addition, as described before, each page break is explicitly indicated with a page end record in each print job (refer to FIG. 9), so that dividing of a print job into pages and detecting of a page break for linking to their partial jobs can be performed only by searching for the page end record without analyzing the page contents data.

When the assortment processing is completed, the job assortment and distribution capability 408 stores each partial job into the standard document file queue 502 for the printer by which each partial job is printed. Here, the assorted partial jobs are sent to printers located at different places. Therefore, this processing is also called distribution. Subsequently, the partial jobs are printed by the print servers in the procedure described with reference to the first or second embodiment.

Performing the assortment and distribution of a print job as described above can automate the assortment and distribution conventionally performed manually after printing, thereby saving labor and shortening the processing time.

In the above-mentioned job assortment and distribution, a print job is assorted by the user interactively while displaying each page. The assortment of this type is herein referred to as interactive assortment in contrast to automatic assortment to be described below.

The job automatic assortment executing section 560 of the print server realizes automatic assortment for automatically assorting the above-mentioned print job assortment and distribution processing of the print job explained above by the following procedure. For automatic assortment, the automatic assortment definition file 561 defined by the user beforehand is provided. The automatic assortment definition file 561 holds the definition information that defines a method of assorting a print job specified in a combination of print server name, printer name, and job ID for example. The assortment method denotes here a method of assorting the pages of a print job based on paper size, character string value, and so on and relating the assorted pages to different printers by which these pages are printed.

For performing automatic assortment, the user of the client instructs the application program 400 for printing in the automatic assortment mode. Specific processing to be executed in the client differs from ordinary print processing in that, instead of specifying an output destination printer, the name of the automatic assortment definition file 561 is specified in a print instruction issued from the application program. The other processing are executed in the same manner as that of ordinary printing. In the print server, if, at reading a print job from the standard document file queue 502 by the first converting section 503, the print job that has been read is a print job specified with the automatic assortment definition file 561, that print job is outputted to the automatic assortment executing section 560.

The automatic assortment executing section 560 divides the inputted print job of standard document file format into pages based on page end records. Further, the automatic assortment executing section 560 processes the page contents data for each of the pages according to the contents of the definition of the automatic assortment definition file 561 and relates each processed page to a printer that prints the contents of that page. The document data corresponding to each page related to its printer is linked to the output destination printer and defined as a partial job. The partial job thus defined is stored into the standard document file queue 502 for the printer for printing the partial job. Subsequently, each partial job is printed in the same manner as that of ordinary printing.

The above-mentioned automatic assortment by the automatic assortment executing section may be performed together with the above-mentioned interactive assortment. First, the interactive assortment is performed. Based on the result of this assortment, the above-mentioned automatic assortment definition file 560 is generated. Subsequently, the automatic assortment is executed based on the automatic assortment definition file 561 generated by the interactive assortment, thereby automating the processing.

As described above, the type of print jobs to be processed by the above-mentioned job display and edit capability, job assortment and distribution capability, and automatic assortment capability is standard document file format that is independent of the type of printers by which prints jobs are printed. Therefore, unlike the conventional examples in which these capabilities must be developed for each of the PDLs, only the capabilities for the standard document file format may be developed and supported in the present invention, thereby saving the development cost for realizing these capabilities.

### Industrial Applicability

According to the invention as described above, reprint processing to be performed at print processing or occurrence of failure is facilitated by use of any printers within the system. Especially, print processing and printer troubleshooting are performed based on a unified standard document file independent of PDL which varies with each printer type, thereby making it necessary to provide capabilities for realizing various printing-associated processing operations such as page extraction only for standard document file format. This novel constitution unifies the development and support processes of the processing capabilities which must be conventionally prepared for all types of PDL, thereby reducing the number of processing development processes.

## Claims

1. A printing system comprising at least one printer (17, 18a, 18b, 19), a print server (15, 16) for controlling said at least one printer, and a terminal device (11, 12, 13) for requesting said print server (15, 16) for printing document data by said printer, wherein
said terminal device (11, 12, 13) has an application program (400) for generating a document to be printed by said printer (17, 18a, 18b, 19), a job generating means (401) for receiving a print request issued by said application program to generate, based on said document generated by said application program (400), a first print job of system-common standard document format independent of a type of said printer, and a job transmitting means for transferring said first print job to said print server (15, 16), and
said print server (15, 16) has a transferred job receiving means for receiving said first print job, a job converting means (503 to 505) for converting said first print job into a second print job having a format corresponding to said printer (17, 18a, 18b, 19) by which said document is to be printed, and a printer control means (520, 530) for printing said document according to said second print job, wherein said print server (15, 16) has a print job pool (54) for temporarily holding said first print job.

2. The printing system according to claim 1, wherein
said job converting means (503) is adapted to store said first print job into said print job pool (54) before outputting said second print job to said printer control means (520, 530).

3. The printing system according to claim 2, wherein
said print server (15, 16) has a failure detecting means (523, 533) for detecting a print failure on said printer (17, 18a, 18b, 19) and a failure notifying means (541) for notifying said terminal device (11, 12, 13) of said print failure, and
said terminal device (11, 12, 13) has a failure reporting means (441) for receiving a notice of said print failure from said failure notifying means (541) to report said print failure to a user, and a print recovering means (442) for requesting said print server (15, 16) for recovering said print failure.

4. The printing system according to claim 3, wherein said print server (15, 16) has a reprinting means for receiving the failure recovery request from said print recovering means (442) and for reading said first print job from said print job pool (54) corresponding to a print job on which said print failure occurred, thereby controlling reprinting of said document.

5. The printing system according to claim 4, wherein said print job pool (54) is adapted to hold said first print job at least until printing of said document is completed.

6. The printing system according to claim 4, wherein said first print job is provided with an identifier by which said print job on which said print failure occurred is identified.

7. The printing system according to claim 4, wherein
said failure detecting means (523, 533) has an acquiring means for acquiring a page of the print job on which said print failure occurred,
said failure notifying means (541) is adapted to perform said notification including information about said page on which said print failure occurred, and
said failure reporting means (441) is adapted to report said page on which said print failure occurred to said user.

8. The printing system according to claim 7, wherein
said failure recovery request includes a specified range of a document for reprinting given by said user,
said reprinting means includes a means for extracting the document of the range specified by said specification from said first print job read from said print job pool (54), generating a third print job having said standard document file format composed of said extracted document, and outputting said third print job to said job converting means (503 to 505), and
said job converting means is adapted to convert said third print job received from said reprinting means into a print job having a format corresponding to said printer (17, 18a, 18b, 19) and output the converted print job to said printer control means (520, 530) to perform said reprinting under the control of said printer control means.

9. The printing system according to claim 7, wherein
said failure recovering request includes a specified range of a document to be reprinted given by said user, and
said job converting means (503 to 505) is adapted to receive said first print job read by said reprinting means, perform page extraction from said first print job received into a print job having said standard document format composed of the document of the range specified in the range specification, output the page-extracted print job to said printer control means (520, 530), and perform said reprinting under the control of said printer control means.

10. The printing system according to claim 4, wherein
said failure recovery request is given by said user and includes specification of a second printer different from the printer on which said print failure occurred,
said job converting means (503 to 505) is adapted to convert said first print job read by said reprinting means into a print job having a format corresponding to said second printer, and output the converted print job to said printer control means (520, 530), and said printer control means (520, 530) is adapted to control the reprinting of said converted print job.

11. The printing system according to claim 2, wherein said print server (15, 16) has an interrupt print executing means (542) for receiving a third print job having said standard document format during printing said document based on said first print job, suspending the printing based on said first print job in execution and executing printing based on said third print job, and, after the printing based on said third print job, resuming the printing based on said first print job.

12. The printing system according to claim 11, wherein said interrupt print executing means (542), before resuming the printing based on said first print job, generates a print job composed of a page not printed because of the suspension in said first print job and resumes printing based on the generated print job.

13. The printing system according to claim 1, wherein said terminal device (11, 12, 13) has a job assortment and distribution means (408) for dividing said first print job into a plurality of partial jobs, each of said plurality of partial jobs being a print page, based on specification by said user, relating each of said plurality of partial jobs to a printer (17, 18a, 18b, 19) for performing printing based on each of said plurality of partial jobs, and transferring each of said plurality of partial jobs to a print server (15, 16) that controls the related printer.

14. The printing system according to claim 1, wherein said printer server (15, 16) has a division criterion for one document, a definition file for relating each of partial documents obtained by dividing said one document by said division criterion to a printer (17, 18a, 18b, 19) for printing the partial document, and a job assortment executing means (408) for dividing said first print job into a plurality of partial jobs according to definition information contained in said definition file, relating each of said plurality of partial jobs to a printer (17, 18a, 18b, 19) for performing printing based on each of said plurality of partial jobs, and redistributing said plurality of partial jobs to a print server (15, 16) controlling,the related printer.

15. The printing system according to claim 1, wherein said print server (15, 16) has a document file queue (502) for accumulating print jobs having said standard document format transferred from said terminal device (11, 12, 13).

16. The printing system according to claim 15, wherein
said terminal device (11, 12, 13) has a job search request means (434) for requesting as instructed by a user to retrieve any of the print jobs accumulated in said document file queue (502), and
said print server (15, 16) has a job search transmitting means (510) for retrieving the print job from said document file queue (502) requested from said job search request means (434) and transfers the retrieved print job to said terminal device (11, 12, 13).

17. The printing system according to claim 16, wherein said terminal device (11, 12, 13) has a job display and edit means (407) for displaying contents of the print job received from said print server (15, 16) and editing said print job according to an instruction by said user and an edited job transmitting means (433) for retransferring the print job edited by said job display and edit means (407) to said print server (15, 16).

## Patentansprüche

1. Drucksystem mit wenigstens einem Drucker (17, 18a, 18b, 19), einem Druckserver (15, 16) zum Steuern des wenigstens einen Druckers und einem Endgerät (11, 12, 13), um den Druckserver (15, 16) zum Drucken von Dokumentdaten durch den Drukker zu veranlassen, wobei
das Endgerät (11, 12, 13) ein Anwendungsprogramm (400) zum Erzeugen eines durch den Drucker (17, 18a, 18b, 19) zu druckenden Dokuments, eine Auftragserzeugungseinrichtung (401) zum Empfangen eines von dem Anwendungsprogramm ausgegebenen Druckauftrags, um auf Grundlage des von dem Anwendungsprogramm (400) erzeugten Dokuments einen ersten Druckauftrag in systemeinheitlichem Standarddokumentformat unabhängig von einem Druckertypus zu erzeugen, und eine Auftragsübermittlungseinrichtung zum Übertragen des ersten Druckauftrags an den Druckserver (15, 16) aufweist, und
der Druckserver (15, 16) eine Empfangseinrichtung, für übertragene Aufträge zum Empfangen des ersten Druckauftrags, eine Auftragskonvertierungseinrichtung (503 bis 505) zum Konvertieren des ersten Druckauftrags in einen zweiten Druckauftrags in einem Format, das dem Drucker (17, 18a, 18b, 19) entspricht, durch den das Dokument zu drucken ist, und eine Druckersteuerungseinrichtung (520, 530) zum Drucken des Dokuments gemäß dem zweiten Druckauftrag aufweist, wobei der Druckserver (15, 16) einen Druckaufträge-Pool (54) zum temporären Zurückhalten des ersten Druckauftrags aufweist.

2. Drucksystem nach Anspruch 1, wobei die Auftragskonvertierungseinrichtung (503) dazu ausgelegt ist, den ersten Druckauftrag in dem Druckaufträge-Pool (54) zu speichern, bevor der zweite Druckauftrag an die Druckersteuerungseinrichtung (520, 530) ausgegeben wird.

3. Drucksystem nach Anspruch 2, wobei
der Druckserver (15, 16) eine Fehlererfassungseinrichtung (523, 533) zum Erfassen eines Druckfehlers in dem Drukker (17, 18a, 18b, 19) und eine Fehlermitteilungseinrichtung (541) zum Mitteilen des Druckfehlers an das Endgerät (11, 12, 13) aufweist, und
das Endgerät (11, 12, 13) eine Fehlerberichtseinrichtung (441) zum Empfangen einer Mitteilung über den Druckfehler von der Fehlermitteilungseinrichtung (541), um den Druckfehler einem Benutzer zu berichten, und eine Druckwiederherstelleinrichtung (442), um den Druckserver (15, 16) zum Beheben des Druckfehlers zu veranlassen, aufweist.

4. Drucksystem nach Anspruch 3, wobei der Druckserver (15, 16) eine Einrichtung zum erneuten Drucken aufweist, um den Fehlerbehebungsbefehl von der Druckwiederherstelleinrichtung (442) zu empfangen, und den ersten Druckauftrag von dem Druckaufträge-Pool (54) zu lesen, der einem Druckauftrag entspricht, bei dem der Druckfehler aufgetreten ist, wodurch das erneute Drucken dieses Dokuments gesteuert wird.

5. Drucksystem nach Anspruch 4, wobei der Druckaufträge-Pool (54) dazu ausgelegt ist, den ersten Druckauftrag wenigstens so lange zurückzuhalten, bis das Drucken des Dokuments abgeschlossen ist.

6. Drucksystem nach Anspruch 4, wobei der erste Druckauftrag mit einer Kennung versehen ist, durch die der Druckauftrag, bei dem der Druckfehler aufgetreten ist, identifiziert wird.

7. Drucksystem nach Anspruch 4, wobei
die Fehlererfassungseinrichtung (523, 533) eine Beschaffungseinrichtung zum Beschaffen einer Seite des Druckauftrags aufweist, bei der der Druckfehler aufgetreten ist,
die Fehlermitteilungseinrichtung (541) dazu ausgelegt ist, die Mitteilung unter Einbeziehung von Information über die Seite, bei der der Druckfehler aufgetreten ist, durchzuführen, und
die Fehlerberichtseinrichtung (441) dazu ausgelegt ist, die Seite, bei der Druckfehler aufgetreten ist, an den Benutzer zu berichten.

8. Drucksystem nach Anspruch 7, wobei
der Fehlerbehebungsbefehl einen durch den Benutzer spezifizierten Bereich eines Dokuments zum erneuten Drucken einschließt,
die Einrichtung zum erneuten Drucken eine Einrichtung aufweist, um das Dokument des durch die Spezifikation vorgegebenen Bereichs aus dem ersten Druckauftrag zu extrahieren, der aus dem Druckaufträge-Pool (54) gelesen wurde, einen dritten Druckauftrag in dem Standarddokumentdateiformat zu erzeugen, der aus dem extrahierten Dokument besteht, und den dritten Druckauftrag an die Auftragskonvertierungseinrichtung (503 bis 505) auszugeben, und
die Auftragskonvertierungseinrichtung dazu ausgelegt ist, den dritten Druckauftrag, der von der Einrichtung zum erneuten Drucken empfangen wurde, in einen Druckauftrag zu konvertieren, der ein dem Drucker (17, 18a, 18b, 19) entsprechendes Format aufweist, und den konvertierten Druckauftrag an die Druckersteuerungseinrichtung (520, 530) auszugeben, um das erneute Drucken unter der Steuerung der Druckersteuerungseinrichtung durchzuführen.

9. Drucksystem nach Anspruch 7, wobei
der Fehlerbehebizngsbefehl einen durch den Benutzer spezifizierten Bereich eines Dokuments zum erneuten Drucken einschließt, und
die Befehlskondertierungseinrichtung (503 bis 505) dazu ausgelegt ist, den ersten Druckbefehl, der von der Einrichtung zum erneuten Drucken gelesen wurde, zu empfangen, eine Seitenextraktion aus dem ersten empfangenen Druckauftrag in einen Druckauftrag im Standarddokumentformat durchzuführen, das aus dem Dokument des in der Bereichsspezifikation spezifizierten Bereich besteht, den seitenextrahierten Druckauftrag an die Druckersteuerungseinrichtung (520, 530) auszugeben und das erneute Drucken unter der Steuerung der Druckersteuerungseinrichtung durchzuführen.

10. Drucksystem nach Anspruch 4, wobei
der Fehlerbehebungsbefehl durch den Benutzer gegeben wird und eine Spezifikation eines zweiten Druckers einschließt, der von dem Drucker, auf dem der Druckfehler aufgetreten ist, verschieden ist,
die Auftragskonvertierungseinrichtung (503 bis 505) dazu ausgelegt ist, den ersten Druckauftrag, der von der Einrichtung zum erneuten Drucken gelesen wurde, in einen Druckauftrag in einem dem zweiten Drucker entsprechenden Format zu konvertieren und den konvertierten, Druckauftrag an die Druckersteuerungseinrichtung (520, 530) auszugeben, und
die Druckersteuerungseinrichtung (520, 530) dazu ausgelegt ist, das erneute Drucken des konvertierten Druckauftrags zu steuern.

11. Drucksystem nach Anspruch 2, wobei der Druckserver (15, 16) eine Druckunterbrechungs-Ausführungseinrichtung (542) aufweist, um einen dritten Druckauftrag in dem Standarddokumentformat während des Druckens des Dokuments auf Grundlage des ersten Druckauftrags zu empfangen, das Drucken auf Grundlage des ersten Druckauftrags während der Ausführung auszusetzen sowie das Drucken auf Grundlage des dritten Druckauftrags auszuführen, und das Drucken auf Grundlage des ersten Druckauftrags nach dem Drucken auf Grundlage des dritten Druckauftrags wieder aufzunehmen.

12. Drucksystem nach Anspruch 11, wobei die Druckunterbrechungs-Ausführungseinrichtung (542) vor Wiederaufnahme des Druckens auf Grundlage des ersten Druckauftrags einen Druckauftrag erzeugt, der aus einer Seite besteht, die wegen der Aussetzung in dem ersten Druckauftrag nicht gedruckt wurde, und das Drucken auf Grundlage des erzeugten Druckauftrags wieder aufnimmt.

13. Drucksystem nach Anspruch 1, wobei das Endgerät (11, 12, 13) eine Auftragsortierungs- und Verteilungseinrichtung (408) aufweist, um den ersten Druckauftrag in mehrere Teilaufträge zu unterteilen, die jeweils in einer Druckseite auf Grundlage einer Benutzerspezifikation bestehen, jeden der mehreren Teilaufträge einem Drucker (17, 18a, 18b, 19) zum Durchführen des Druckens auf Grundlage jedes der mehreren Teilaufträge zuzuordnen, und jeden der mehreren Teilaufträge an einen Druckserver (15, 16) zu übertragen, der den zugeordneten Drucker steuert.

14. Drucksystem nach Anspruch 1, wobei der Druckserver (15, 16) ein Unterteilungskriterium für ein Dokument, eine Definitionsdatei zum Zuordnen jedes der Teildokumente, die durch das Unterteilen des einen Dokuments mit dem Unterteilungskriterium erhalten wurden, an einen Drucker (17, 18a, 18b, 19), um das Teildokument zu drucken, und eine Auftragssortier-Ausführeinrichtung (408) aufweist, um den ersten Druckauftrag in mehrere Teilaufträge gemäß in der Definitionsdatei enthaltener Definitionsinformationen zu unterteilen, jeden der mehreren Teilaufträge einem Drucker (17, 18a, 18b, 19) zuzuordnen, um das Drucken auf Grundlage jedes der mehreren Teilaufträge durchzuführen, und die mehreren Teilaufträge an einen den zugeordneten Drucker steuernden Druckserver (15, 16) neu zu verteilen.

15. Drucksystem nach Anspruch 1, wobei der Druckserver (15, 16) eine Dokumentdateiwarteschlange (502) zum Sammeln von Druckaufträgen in dem Standarddokumentformat aufweist, die von dem Endgerät (11, 12, 13) übertragen wurden.

16. Drucksystem nach Anspruch 15, wobei
das Endgerät (11, 12, 13) eine Auftragssuche-Befehlseinrichtung (434) aufweist, um gemäß einem Benutzerbefehl einen beliebigen der in der Dokumentdateiwarteschlange (502) angesammelten Druckbefehle aufzufinden, und
der Druckserver (15, 16) eine Befehlssuche-Übertragungseinrichtung (510) aufweist, um den Druckauftrag in der Dokumentdateiwarteschlange (502) aufzufinden, der von der Auftragssuche-Befehlseinrichtung (434) gefordert wird, und den aufgefundenen Druckauftrag an das Endgerät (11, 12, 13) überträgt.

17. Drucksystem nach Anspruch 16, wobei das Endgerät (11, 12, 13) eine Befehlsanzeige- und Editiereinrichtung (407), um Inhalte des von dem Druckserver (15, 16) empfangenen Druckauftrags anzuzeigen und den Druckauftrag gemäß einem Benutzerbefehl zu editieren, und eine Einrichtung zum Übertragen eines editierten Auftrags (433), um den durch die Auftragsanzeige- und Editiereinrichtung (407) editierten Druckauftrag erneut an den Druckserver (15, 16) zu übertragen, aufweist.

## Revendications

1. Système d'impression comportant au moins une imprimante (17, 18a, 18b, 19), un serveur d'impression (15, 16) pour commander ladite au moins une imprimante, et un dispositif terminal (11, 12, 13) pour demander audit serveur d'impression (15, 16) d'imprimer des données de document par ladite imprimante, dans lequel :
ledit dispositif terminal (11, 12, 13) a un programme d'application (400) pour générer un document à imprimer par ladite imprimante (17, 18a, 18b, 19), des moyens de génération de tâche (401) pour recevoir une demande d'impression envoyée par ledit programme d'application pour générer, sur la base dudit document généré par ledit programme d'application (400), une première tâche d'impression ayant un format de document standard commun au système indépendant d'un type de ladite imprimante, et des moyens de transmission de tâche pour transférer ladite première tâche d'impression vers ledit serveur d'impression (15, 16), et
ledit serveur d'impression (15, 16) a des moyens de réception de tâche transférée pour recevoir ladite première tâche d'impression, des moyens de conversion de tâche (503 à 505) pour convertir ladite première tâche d'impression en une deuxième tâche d'impression ayant un format correspondant à ladite imprimante (17, 18a, 18b, 19) par laquelle ledit document doit être imprimé, et des moyens de commande d'imprimante (520, 530) pour imprimer ledit document conformément à ladite deuxième tâche d'impression, dans lequel ledit serveur d'impression (15, 16) a un concentrateur de tâches d'impression (54) pour temporairement maintenir ladite première tâche d'impression.

2. Système d'impression selon la revendication 1, dans lequel
lesdits moyens de conversion de tâche (503) sont adaptés pour mémoriser ladite première tâche d'impression dans ledit concentrateur de tâches d'impression (54) avant de délivrer en sortie ladite deuxième tâche d'impression auxdits moyens de commande d'imprimante (520, 530).

3. Système d'impression selon la revendication 2, dans lequel
ledit serveur d'impression (15, 16) a des moyens de détection de défaillance (523, 533) pour détecter une défaillance d'impression sur ladite imprimante (17, 18a, 18b, 19) et des moyens de notification de défaillance (541) pour notifier audit dispositif terminal (11, 12, 13) ladite défaillance d'impression, et
ledit dispositif terminal (11, 12, 13) a des moyens de signalisation de défaillance (441) pour recevoir une notification de ladite défaillance d'impression à partir desdits moyens de notification de défaillance (541) pour signaler ladite défaillance d'impression à un utilisateur, et des moyens de rétablissement d'impression (442) pour demander audit serveur d'impression (15, 16) de rétablir ladite défaillance d'impression.

4. Système d'impression selon la revendication 3, dans lequel ledit serveur d'impression (15, 16) a des moyens de réimpression pour recevoir la demande de rétablissement de défaillance depuis lesdits moyens de rétablissement d'impression (442) et pour lire ladite première tâche d'impression à partir dudit concentrateur de tâches d'impression (54) correspondant à une tâche d'impression sur laquelle est apparue ladite défaillance d'impression, commandant ainsi la réimpression dudit document.

5. Système d'impression selon la revendication 4, dans lequel ledit concentrateur de tâches d'impression (54) est adapté pour maintenir ladite première tâche d'impression au moins jusqu'à ce que l'impression dudit document soit achevée.

6. Système d'impression selon la revendication 4, dans lequel ladite première tâche d'impression est munie d'un identificateur par lequel ladite première tâche d'impression sur laquelle est apparue ladite défaillance d'impression est identifiée.

7. Système d'impression selon la revendication 4, dans lequel
lesdits moyens de détection de défaillance (523, 533) ont des moyens d'acquisition pour acquérir une page de la tâche d'impression sur laquelle est apparue ladite défaillance d'impression,
lesdits moyens de notification de défaillance (541) sont adaptés pour effectuer ladite notification en incluant des informations concernant ladite page sur laquelle est apparue ladite défaillance d'impression, et
lesdits moyens de signalisation de défaillance (441) sont adaptés pour signaler ladite page sur laquelle est apparue ladite défaillance d'impression audit utilisateur.

8. Système d'impression selon la revendication 7, dans lequel
ladite demande de rétablissement après défaillance inclut une plage spécifiée d'un document pour une réimpression indiqué par ledit utilisateur,
lesdits moyens de réimpression incluent des moyens pour extraire le document de la plage spécifiée par ladite spécification à partir de ladite première tâche d'impression lue à partir dudit concentrateur de tâches d'impression (54), générer une troisième tâche d'impression ayant ledit format de fichier de document standard constituée dudit document extrait, et délivrer en sortie ladite troisième tâche d'impression auxdits moyens de conversion de tâche (503 à 505), et
lesdits moyens de conversion de tâche sont adaptés pour convertir ladite troisième tâche d'impression reçue depuis lesdits moyens de réimpression en une tâche d'impression ayant un format correspondant à ladite imprimante (17, 18a, 18b, 19) et pour délivrer en sortie la tâche d'impression convertie auxdits moyens de commande d'imprimante (520, 530) pour effectuer ladite réimpression sous la commande desdits moyens de commande d'imprimante.

9. Système d'impression selon la revendication 7, dans lequel
ladite demande de rétablissement après défaillance inclut une plage spécifiée d'un document à réimprimer indiqué par ledit utilisateur, et
lesdits moyens de conversion de tâche (503 à 505) sont adaptés pour recevoir ladite première tâche d'impression lue par lesdits moyens de réimpression, effectuer une extraction de page à partir de ladite première tâche d'impression reçue dans une tâche d'impression ayant ledit format de document standard constituée du document de la plage spécifiée dans la spécification de plage, délivrer en sortie la tâche d'impression ayant subi une extraction de page auxdits moyens de commande d'imprimante (520, 530), et effectuer ladite réimpression sous la commande desdits moyens de commande d'imprimante.

10. Système d'impression selon la revendication 4, dans lequel
ladite demande de rétablissement après défaillance est envoyée par ledit utilisateur et inclut une spécification d'une deuxième imprimante différente de l'imprimante sur laquelle est apparue ladite défaillance d'impression,
lesdits moyens de conversion de tâche (503 à 505) sont adaptés pour convertir ladite première tâche d'impression lue par lesdits moyens de réimpression en une tâche d'impression ayant un format correspondant à ladite deuxième imprimante, et délivrer en sortie la tâche d'impression convertie auxdits moyens de commande d'imprimante (520, 530), et
lesdits moyens de commande d'imprimante (520, 530) sont adaptés pour commander la réimpression de ladite tâche d'impression convertie.

11. Système d'impression selon la revendication 2, dans lequel ledit serveur d'impression (15, 16) a des moyens d'exécution d'interruption d'impression (542) pour recevoir une troisième tâche d'impression ayant ledit format de document standard durant l'impression dudit document sur la base de ladite première tâche d'impression, suspendre l'impression sur la base de ladite première tâche d'impression en cours d'exécution et exécuter l'impression sur la base de ladite troisième tâche d'impression et, après l'impression basée sur ladite troisième tâche d'impression, reprendre l'impression sur la base de ladite première tâche d'impression.

12. Système d'impression selon la revendication 11, dans lequel lesdits moyens d'exécution d'interruption d'impression (542), avant la reprise de l'impression sur la base de ladite première tâche d'impression, génèrent une tâche d'impression constituée d'une page non-imprimée du fait de la suspension de ladite première tâche d'impression et reprennent l'impression sur la base de la tâche d'impression générée.

13. Système d'impression selon la revendication 1, dans lequel ledit dispositif terminal (11, 12, 13) a des moyens de classement et de distribution de tâche (408) pour diviser ladite première tâche d'impression en une pluralité de tâches partielles, chacune de ladite pluralité de tâches partielles étant une page d'impression, sur la base d'une spécification dudit utilisateur, relier chaque tâche de ladite pluralité de tâches partielles à une imprimante (17, 18a, 18b, 19) pour effectuer l'impression sur la base de chacune de ladite pluralité de tâches partielles, et transférer chacune de ladite pluralité de tâches partielles à un serveur d'impression (15, 16) qui commande l'imprimante associée.

14. Système d'impression selon la revendication 1, dans lequel ledit serveur d'impression (15, 16) a un critère de division d'un document, un fichier de définition pour lier chacun des documents partiels obtenus en divisant ledit document par ledit critère de division à une imprimante (17, 18a, 18b, 19) pour imprimer le document partiel, et des moyens d'exécution de classement de tâche (408) pour diviser ladite première tâche d'impression en une pluralité de tâches partielles conformément à des informations de définition contenues dans ledit fichier de définition, lier chacune de ladite pluralité de tâches partielles à une imprimante (17, 18a, 18b, 19) pour effectuer l'impression sur la base de chacune de ladite pluralité de tâches partielles, et redistribuer ladite pluralité de tâches partielles à un serveur d'impression (15, 16) commandant l'imprimante associée.

15. Système d'impression selon la revendication 1, dans lequel ledit serveur d'impression (15, 16) a une file d'attente de fichiers de documents (502) pour accumuler des tâches d'impression ayant ledit format de document standard transférées à partir dudit dispositif terminal (11, 12, 13).

16. Système d'impression selon la revendication 15, dans lequel
ledit dispositif terminal (11, 12, 13) a des moyens de demande de recherche de tâche (434) pour demander, lorsque ordonné par un utilisateur, de récupérer l'une quelconque des tâches d'impression accumulées dans ladite file d'attente de fichiers de documents (502), et
ledit serveur d'impression (15, 16) a des moyens de transmission de recherche de tâche (510) pour récupérer la tâche d'impression à partir de ladite file d'attente de fichiers de document (502) demandée par lesdits moyens de demande de recherche de tâche (434) et transférer la tâche d'impression récupérée audit dispositif terminal (11, 12, 13).

17. Système d'impression selon la revendication 16, dans lequel ledit dispositif terminal (11, 12, 13) a des moyens d'affichage et d'édition de tâche (407) pour afficher le contenu de la tâche d'impression reçue depuis ledit serveur d'impression (15, 16) et éditer ladite tâche d'impression conformément à une instruction dudit utilisateur et des moyens de transmission de tâche éditée (433) pour retransférer la tâche d'impression éditée par lesdits moyens d'affichage et d'édition de tâche (407) vers ledit serveur d'impression (15, 16).
